# EUROPEAN PATENT APPLICATION

(11) **EP 4 629 048 A1**
(43) Date of publication of application: **08.10.2025**
(21) Application number: 23912826.7
(22) Date of filing: 22.12.2023
(51) Int. Cl.: G06F 3/04883, G06F 3/04842, G06F 3/04817, G06F 3/0486, H04M 1/72454

(54) **ELECTRONIC DEVICE WITH CHANGEABLE SHAPE ON BASIS OF USER'S GESTURE ON SCREEN AND CONTROL METHOD THEREOF**

(30) Priority: 26.12.2022 KR 20220184086; 26.01.2023 KR 20230010248
(71) Applicant: Samsung Electronics Co., Ltd., Suwon-si, Gyeonggi-do 16677 (KR)
(72) Inventor: SONG, Taeyang, Suwon-si Gyeonggi-do 16677 (KR); LEE, Sangeun, Suwon-si Gyeonggi-do 16677 (KR); PARK, Jihea, Suwon-si Gyeonggi-do 16677 (KR); KIM, Sukdong, Suwon-si Gyeonggi-do 16677 (KR); SEO, Soohyun, Suwon-si Gyeonggi-do 16677 (KR); HONG, Hyunju, Suwon-si Gyeonggi-do 16677 (KR)
(74) Representative: Gulde & Partner
(86) International application number: PCT/KR2023/021462
(87) International publication number: WO 2024/144151

(57) **Abstract**

Disclosed are an electronic device with changeable shape on the basis of a user's gesture on a screen and a control method thereof. According to an embodiment of the present document, included are the operations of: detecting a user's gesture on a first screen displayed on a flexible display of the electronic device; determining whether the user's gesture is held in a designated area of the flexible display for at least a designated time; displaying, around the area in which the user's gesture is held, a first icon for inserting a second housing of the electronic device into a first housing of the electronic device and at least one second icon for extending the second housing out of the first housing by a designated length; changing the shape of the electronic device by inserting the second housing into the first housing or by extending the second housing out of the first housing by a designated length; and displaying a second screen, which is different from the first screen, on the electronic device of which the shape has been changed.

## Description

### [Technical Field]

The disclosure relates to an electronic device that changes its shape based on a user gesture on the screen, and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

### [Detailed Description of the Invention]

### [Technical Problem]

An electronic device (e.g., a rollable smartphone device configured to change the exposed area of a flexible display) according to the conventional art provides a function of terminating a multi-window mode (e.g., a display mode in which the respective execution screens of a plurality of applications are simultaneously displayed) or scrolling the screen according to a user gesture (e.g., a drag gesture starting in one area of the screen and released in another area) on the screen. However, the electronic device according to the conventional art merely provides a function of controlling the screen (e.g., terminating the multi-window mode and/or scrolling the screen) according to a user gesture, but cannot provide a function of changing the shape of the electronic device (e.g., changing the exposed area of the flexible display) according to a user gesture.

According to an embodiment of the disclosure, there may be provided an electronic device that performs a function or operation of changing the shape of the electronic device (e.g., changing the exposed area of the flexible display) together with a function or operation of controlling the screen (e.g., terminating the multi-window view mode and/or scrolling the screen) when it is detected that a user gesture (e.g., a drag gesture) on the screen is held in a designated area (e.g., an area around the edge of the flexible display exposed) for a designated time or more.

According to an embodiment of the disclosure, there may be provided a method for controlling an electronic device that performs a function or operation of changing the shape of the electronic device (e.g., changing the exposed area of the flexible display) together with a function or operation of controlling the screen (e.g., terminating the multi-window view mode and/or scrolling the screen) when it is detected that a user gesture (e.g., a drag gesture) on the screen is held in a designated area (e.g., an area around the edge of the flexible display exposed) for a designated time or more.

### [Technical Solution]

According to an embodiment of the disclosure, an electronic device may comprise a first housing, a second housing disposed to be movable with respect to the first housing and overlapping at least a portion of the first housing, at least one processor and a driving module disposed in the second housing, and a flexible display partially mounted on a surface of the second housing and at least partially exposed to an outside of the electronic device. A portion of the flexible display may be inserted into the first housing or drawn out from the first housing according to sliding in or sliding out of the second housing. The at least one processor may be configured to detect a user gesture on a first screen displayed on a flexible display of an electronic device, determine whether the user gesture is held in a designated area of the flexible display for a designated time or more, based on detecting the user gesture, display a first icon for inserting a second housing of the electronic device into a first housing of the electronic device and at least one second icon for drawing out the second housing to an outside of the first housing by a designated length, around the area where the user gesture is held based on the determination, change a shape of the electronic device by inserting the second housing into the first housing or drawing out the second housing to the outside of the first housing by the designated length based on a user input to the first icon or the at least one second icon, and display a second screen different from the first screen on the shape-changed electronic device.

According to an embodiment of the disclosure, a method for controlling an electronic device may comprise detecting a user gesture on a first screen displayed on a flexible display of an electronic device, determining whether the user gesture is held in a designated area of the flexible display for a designated time or more based on detecting the user gesture, based on the determination, displaying, around an area where the user gesture is held, a first icon for inserting a second housing of the electronic device into a first housing of the electronic device and at least one second icon for drawing out the second housing to an outside of the first housing by a designated length, based on a user input to the first icon or the at least one second icon, changing a shape of the electronic device by inserting the second housing into the first housing or drawing out the second housing to the outside of the first housing by the designated length, and displaying a second screen different from the first screen on the shape-changed electronic device.

### [Advantageous Effects]

According to an embodiment of the disclosure, when it is detected that a user gesture (e.g., a drag gesture) on the screen is held in a designated area (e.g., an area around the edge of the flexible display exposed) for a designated time or more, the electronic device may perform the function or operation of controlling the screen (e.g., terminating the multi-window view mode and/or scrolling the screen) and the function or operation of changing the shape of the electronic device (e.g., changing the exposed area of the flexible display) together, sufficiently reflecting the user's needs to view the screen on the flexible display exposed in a size larger or smaller than the current screen size.

### [Brief Description of the Drawings]

FIG. 1 is a block diagram illustrating an electronic device in a network environment according to various embodiments of the disclosure;
FIG. 2 is a view illustrating a state in which a second display area of a display is received in a housing according to various embodiments of the disclosure;
FIG. 3 is a view illustrating a state in which a second display area of a display is exposed to the outside of a housing according to various embodiments of the disclosure;
FIG. 4 is an exploded perspective view illustrating an electronic device according to various embodiments of the disclosure;
FIG. 5A is a cross-sectional view taken along line A-A' of FIG. 2 according to various embodiments of the disclosure;
FIG. 5B is a cross-sectional view taken along line B-B' of FIG. 3 according to various embodiments of the disclosure;
FIG. 6 is an exemplary view illustrating a function or operation of changing the shape of an electronic device (e.g., changing from a closed state to a fully opened state) while terminating a multi-window view mode according to detecting a user gesture by an electronic device according to an embodiment of the disclosure;
FIGS. 7A, 7B, 7C, and 7D are exemplary views illustrating the function or operation described in FIG. 6 from a user interface perspective;
FIG. 8 is an exemplary view illustrating a function or operation of changing the shape of an electronic device (e.g., changing from a closed state to a fully opened state) while scrolling the screen being displayed according to detecting a user gesture by an electronic device according to an embodiment of the disclosure;
FIGS. 9A, 9B, 9C, and 9D are exemplary views illustrating the function or operation described in FIG. 8 from a user interface perspective;
FIGS. 10 and 11 are exemplary views illustrating an electronic device having a display extension shape in a direction different from the shape of the electronic device described in relation to FIG. 2;
FIGS. 12A, 12B, 12C and 12D are exemplary views illustrating that the function or operation described in FIG. 6 is performed by an electronic device having the form shown in FIGS. 10 and 11 from a user interface perspective;
FIGS. 13A, 13B, and 13C are exemplary views illustrating that the function or operation described in FIG. 8 is performed by an electronic device having the form shown in FIGS. 10 and 11 from a user interface perspective;
FIG. 14 is an exemplary view illustrating a function or operation of changing the shape of an electronic device based on an input to at least one icon displayed on the electronic device according to an embodiment of the disclosure;
FIGS. 15A and 15B are exemplary views illustrating a function or operation of displaying at least one icon around an edge of a display corresponding to a first direction when a user gesture in the first direction is detected from a user interface perspective, in relation to FIG. 14;
FIGS. 16A and 16B are exemplary views illustrating a function or operation of displaying at least one icon around an edge of a display corresponding to a second direction when a user gesture in the second direction is detected from a user interface perspective, in relation to FIG. 14;
FIG. 17 is an exemplary view illustrating a function or operation of displaying an indicator indicating an extension direction of a flexible display when a hold of a user gesture input to an electronic device is detected by the electronic device according to an embodiment of the disclosure;
FIGS. 18A, 18B, and 18C are exemplary views illustrating a function or operation of displaying an indicator indicating that a flexible display is extended in a first direction by an electronic device when a user gesture in the first direction is detected from a user interface perspective, in relation to FIG. 17; and
FIGS. 19A, 19B, and 19C are exemplary views illustrating a function or operation of displaying an indicator indicating that a flexible display is extended in a first direction by an electronic device when a user gesture in the second direction is detected from a user interface perspective, in relation to FIG. 17.

### [Mode for Carrying out the Invention]

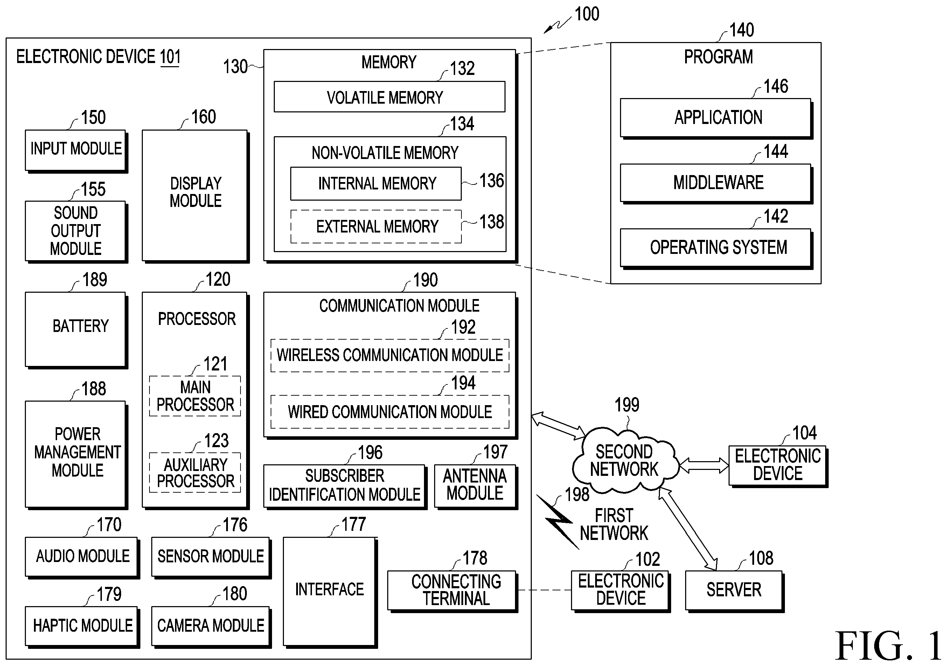

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

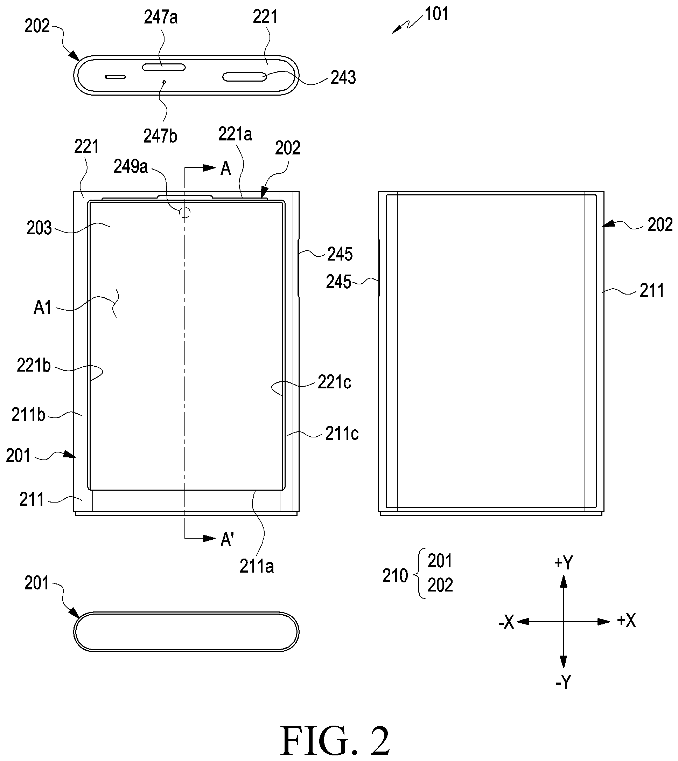

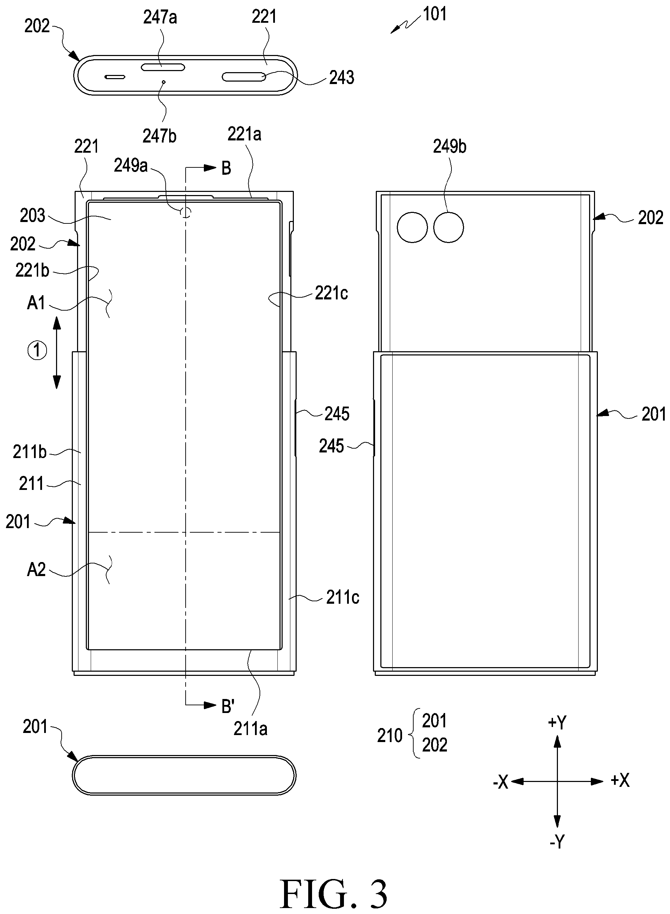

FIG. 2 is a view illustrating a state in which a second display area of a display is received in a housing according to various embodiments of the disclosure. FIG. 3 is a view illustrating a state in which a second display area of a display is exposed to the outside of a housing according to various embodiments of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state shown in FIG. 2 may be referred to as a closed state of the electronic device 101 or housing 210 and a slide-in state of the display 203.

The state shown in FIG. 3 may be referred to as an opened state of the electronic device 101 or housing 210 and a slide-out state of the display 203.

Referring to FIGS. 2 and 3, the electronic device 101 may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in the shown direction with respect to the first housing 201, for example, a direction indicated by the arrow η.

According to various embodiments, the second housing 202 may be referred to as a slide portion or a slide housing, and may be movable relative to the first housing 201. According to an embodiment, the second housing 202 may receive various electrical/electronic components, such as a circuit board or a battery.

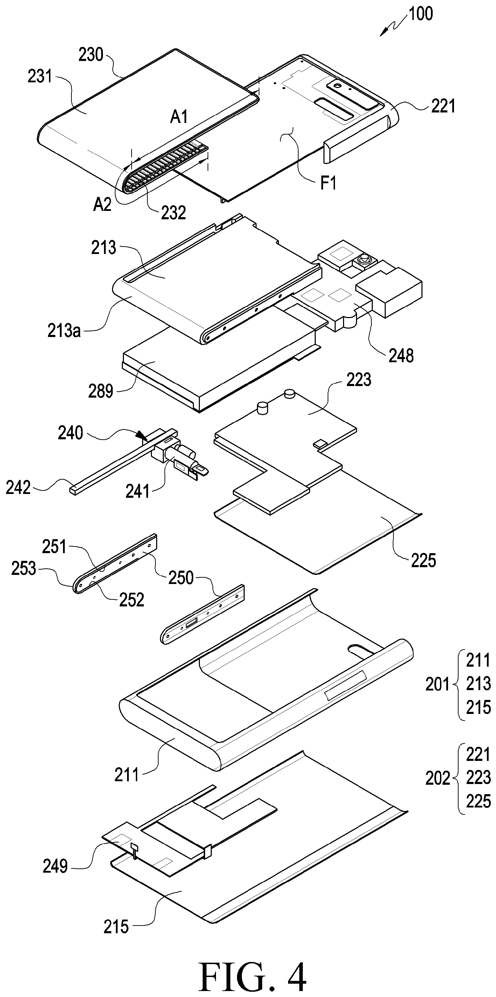

According to an embodiment, the first housing 201 may accommodate a sub circuit board (e.g., the second circuit board 249 of FIG. 4) electrically connected to a motor, a speaker, a SIM socket, and/or the main circuit board. The second housing 202 may accommodate a main circuit board (e.g., the first circuit board 248 of FIG. 4) on which electrical components such as an application processor (AP) and a communication processor (CP) are mounted.

According to various embodiments, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to various embodiments, the 1-1th sidewall 211a, 1-2th sidewall 211b, and 1-3th sidewall 211c of the first cover member 211 may be formed to have a side opening (e.g., in the front surface) to receive at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to various embodiments, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to various embodiments, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to various embodiments, as the second housing 202 moves in a first direction (e.g., direction ①) parallel to the 1-2th sidewall 211b or the 1-3th sidewall 211c, the housing 210 may form an opened state and a closed state. In the closed state, the second housing 202 may be positioned at a first distance from the 1-1th sidewall 211a and, in the opened state, the second housing 202 may be moved to be positioned at a second distance larger than the first distance from the 1-1th sidewall 211a. In some embodiments, in the closed state, the first housing 201 may surround a portion of the 2-1th side wall 221a.

According to various embodiments, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 may include a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides relative to the first housing 201, the second display area A2 may be received in the first housing 201 (e.g., the slide-in state) or be visually exposed to the outside of the electronic device 101 (e.g., the slide-out state).

According to various embodiments, the second display area A2 may be moved while being substantially guided by one area (e.g., the curved surface 213a of FIG. 4) of the first housing 201 and be received in the space positioned in the first housing 201 or exposed to the outside of the electronic device 101. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to various embodiments, when viewed from above the second cover member 221 (e.g., front cover), if the electronic device 210 changes from the closed state to opened state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or opened state of the housing 210, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to various embodiments, the key input device 245 may be positioned in one area of the first housing 201. Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201.

According to various embodiments, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to various embodiments, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

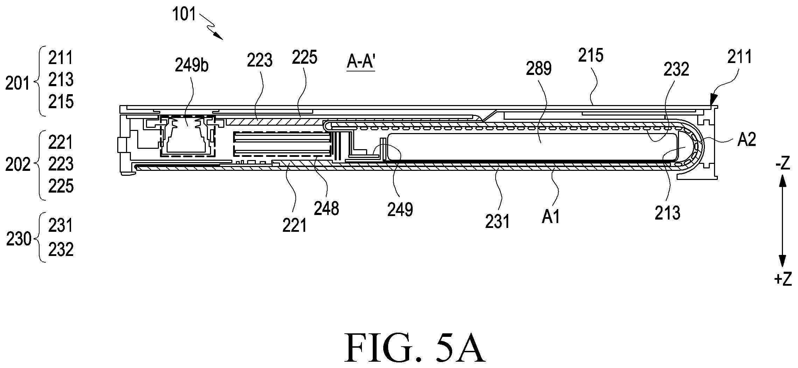

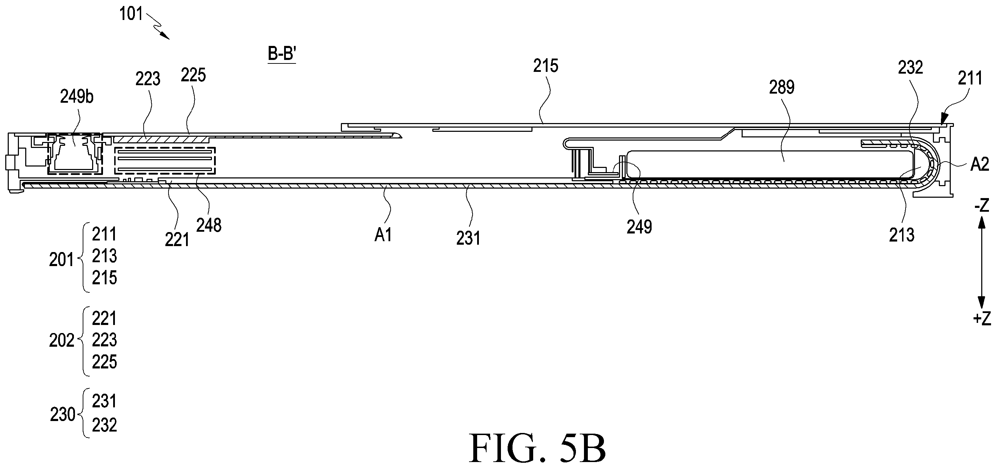

According to various embodiments, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202.

According to various embodiments, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view illustrating an electronic device according to various embodiments of the disclosure.

FIG. 5A is a cross-sectional view taken along line A-A' of FIG. 2 according to various embodiments of the disclosure.

FIG. 5B is a cross-sectional view taken along line B-B' of FIG. 3 according to various embodiments of the disclosure.

Referring to FIGS. 4, 5A, and/or 5B, an electronic device 101 may include a first housing 201, a second housing 202, a display assembly 230, and a driving structure 240. The configuration of the first housing 201, the second housing 202, and the display assembly 230 of FIGS. 4, 5A, and/or 5B may be identical in whole or part to the configuration of the first housing 201, the second housing 202, and the display 203 of FIGS. 2 and/or 3.

According to various embodiments, the first housing 201 may include a first cover member 211 (e.g., the first cover member 211 of FIGS. 2 and 3), a frame 213, and a first rear plate 215.

According to various embodiments, the first cover member 211 may receive at least a portion of the frame 213 and receive a component (e.g., battery 289) positioned in the frame 213. According to an embodiment, the first cover member 211 may be formed to surround at least a portion of the second housing 202. According to an embodiment, the second circuit board 249 receiving the electronic component (e.g., the processor 120 and/or the memory 130 of FIG. 1) may be connected to the first cover member 211.

According to various embodiments, the frame 213 may be connected to the first cover member 211. For example, the frame 213 may be connected to the first cover member 211. The second housing 202 is movable relative to the first cover member 211 and/or the frame 213. According to an embodiment, the frame 213 may receive a battery 289 (e.g., the battery 189 of FIG. 1). According to an embodiment, the frame 213 may include a curved portion 213a facing the display assembly 230.

According to various embodiments, the first rear plate 215 may substantially form at least a portion of the exterior of the first housing 201 or the electronic device 101. For example, the first rear plate 215 may be coupled to the outer surface of the first cover member 221. According to an embodiment, the first rear plate 215 may provide a decorative effect on the exterior of the electronic device 101. The first rear plate 215 may be formed of at least one of metal, glass, synthetic resin, or ceramic.

According to various embodiments, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ① in FIG. 3).

According to various embodiments, the second cover member 221 may support at least a portion of the display 203. For example, the second cover member 221 may include a first surface F1. The first display area A1 of the display 203 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221.

According to various embodiments, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to various embodiments, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be formed of at least one of metal, glass, synthetic resin, or ceramic.

According to various embodiments, the display assembly 230 may include a display 231 (e.g., the display 203 of FIGS. 2 and/or 3) and a multi-bar structure 232 supporting the display 203. According to an embodiment, the display 231 may be referred to as a flexible display, a foldable display, and/or a rollable display.

According to various embodiments, the multi-bar structure 232 may be connected to or attached to at least a portion (e.g., the second display area A2) of the display 231. According to an embodiment, as the second housing 202 slides, the multi-bar structure 232 may move with respect to the first housing 201. In the closed state of the electronic device 101 (e.g., the state of FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to various embodiments, the driving structure 240 may move the second housing 202 relative to the first housing 201. For example, the drive structure 240 may include a motor 241 configured to generate a driving force for sliding the housing 201 and 202. The driving structure 240 may include a gear (e.g., a pinion) connected to the motor 241 and a rack 242 configured to mesh with the gear.

According to various embodiments, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to various embodiments, the first housing 201 may receive the first circuit board 248 (e.g., a main board). According to an embodiment, a processor (e.g., the processor 120 of FIG. 1), memory (e.g., the memory 130 of FIG. 1), and/or an interface (e.g., the interface 177 of FIG. 1) may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to various embodiments, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a connection flexible board. The second circuit board 249 may be electrically connected with electric components disposed in an end area of the electronic device 101, such as the battery 289 or a speaker and/or a sim socket, and may transfer signals and power. According to an embodiment, the second circuit board 249 may receive a wireless charging antenna (e.g., coil). For example, the battery 289 may receive power from an external electronic device through the wireless charging antenna. As another example, the battery 289 may transfer power to the external electronic device by the wireless charging antenna.

According to various embodiments, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to an embodiment, the battery 289 may be positioned in a frame 213, and the battery 289 may be slid along with the frame 213.

According to various embodiments, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to various embodiments, the guide rail 250 may provide pressure to the multi-bar structure 233 based on the driving of the motor 241.

According to an embodiment, when the electronic device 101 changes from the closed state to opened state, the inner portion 252 of the guide rail 250 may provide pressure to the multi-bar structure 232. The multi-bar structure 232 receiving the pressure may be moved along the slit 251 of the guide rail 250, and the second housing 202 may be changed from the slide-in state to slide-out state with respect to the first housing 201. At least a portion of the display assembly 230 accommodated between the first cover member 211 and the frame 213 may be extended to the front surface.

According to an embodiment, when the electronic device 101 changes from the opened state to closed state, an outer portion 253 of the guide rail 250 may provide pressure to the bent multi-bar structure 232. The multi-bar structure 232 receiving the pressure may be moved along the slit 251 of the guide rail 250, and the second housing 202 may be changed from the slide-out state to slide-in state with respect to the first housing 201. At least a portion of the display assembly 230 may be accommodated between the first cover member 211 and the frame 213.

Referring to FIG. 5A, in the closed state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be decreased. For example, if the second housing 202 is fully received in the first housing 201, the first display area A1 of the display 231 may be visually exposed, and the second display area A2 may not be visually exposed. At least a portion of the second display area A2 may be disposed between the battery 289 and the rear plate 215 and 225.

Referring to FIG. 5B, in the opened state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

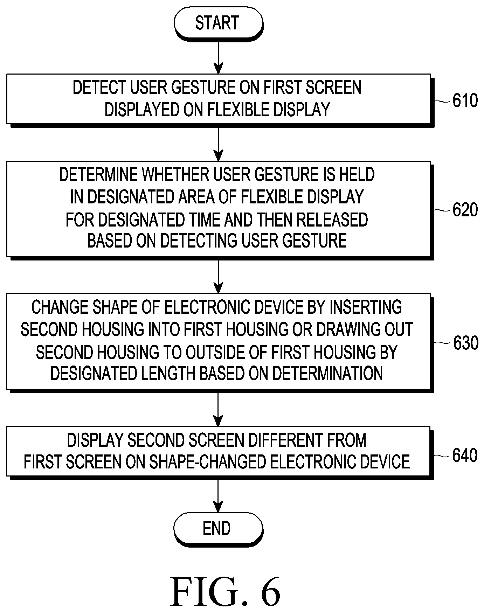

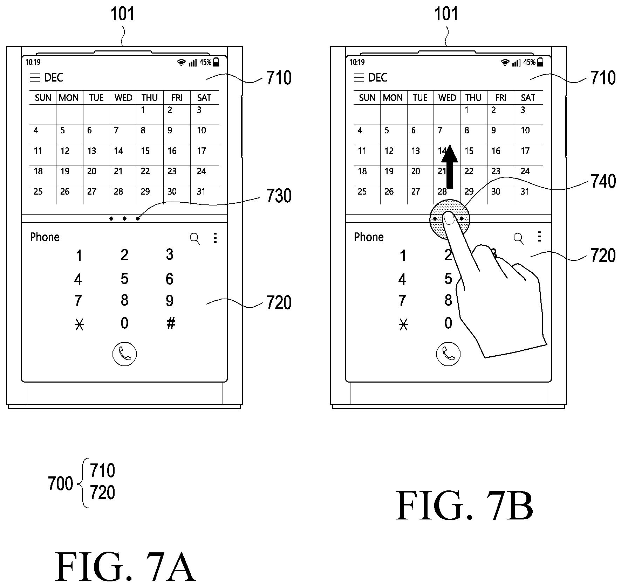

FIG. 6 is an exemplary view illustrating a function or operation of changing the shape of an electronic device 101 (e.g., changing from a closed state to a fully opened state) while terminating a multi-window view mode according to detecting a first user gesture 740 by an electronic device 101 according to an embodiment of the disclosure. FIGS. 7A to 7D are exemplary views illustrating the function or operation described in FIG. 6 from the perspective of a user interface.

Referring to FIG. 6, according to an embodiment of the disclosure, in operation 610, the electronic device 101 may detect a first user gesture 740 on a first screen 700 displayed on a flexible display (e.g., the display 203). According to an embodiment of the disclosure, as shown in FIG. 7A, the first screen 700 may include a first execution screen 710 of a first application (e.g., a calendar application), a second execution screen 720 of a second application (e.g., a call application), and/or a first visual object 730 displayed at a boundary between the first execution screen 710 and the second execution screen 720 to indicate the boundary between the first execution screen 710 and the second execution screen 720, displayed through a multi-window mode (e.g., a display mode in which the respective execution screens of a plurality of applications are simultaneously displayed). According to an embodiment of the disclosure, as shown in FIG. 7B, the first user gesture 740 may include a drag gesture in a designated direction (e.g., the first direction) on the first screen 700 (e.g., a first visual object 730). According to an embodiment of the disclosure, the first user gesture 740 may include other various gestures than the drag gesture, such as a swipe gesture, a tap gesture, a touch gesture through an external electronic device (e.g., a stylus pen), and/or a hovering gesture.

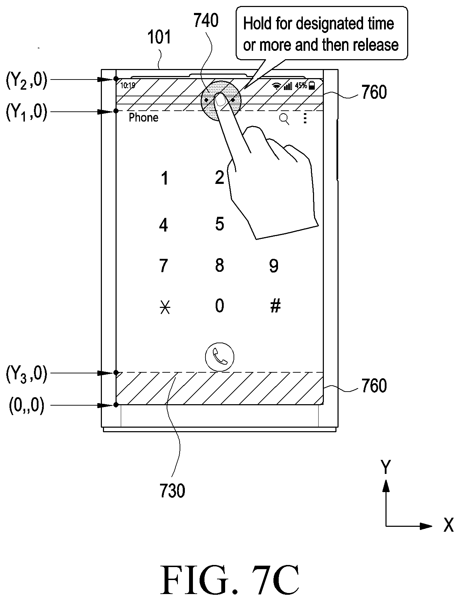

According to an embodiment of the disclosure, in operation 620, the electronic device 101 may change the screen ratio of the multi-window mode and display the same based on detecting the first user gesture 740 and then determine whether the first user gesture 740 is held and then released in a designated area 760 of the flexible display (e.g., the display 203) for a designated time or more. According to an embodiment of the disclosure, as shown in FIG. 7B, the first user gesture 740 may include a drag gesture to drag the first visual object 730 to the designated area 760 of the flexible display (e.g., the display 203). According to an embodiment of the disclosure, as shown in FIG. 7C, the designated area 760 may include an around-edge area (e.g., an area around the upper edge, which is a rectangular area having a height of Y2-Y1) of the flexible display (e.g., the display 203) exposed to the outside. According to an embodiment of the disclosure, the designated area 760 may be defined previously (e.g., at the time of manufacturing the electronic device 101) or may be defined by the user. According to an embodiment of the disclosure, as shown in FIG. 7C, the electronic device 101 may display, in the enlarged application execution screen area, a third execution screen 730 of the second application, in which the attributes (e.g., the sizes of various objects included in the second execution screen 720, types of visual objects, and/or resolution or such visual elements) of the second execution screen 720 of the second application have been at least partially changed, based on detecting the first user gesture 740 to move the first visual object 730 in the first direction (e.g., the direction toward the upper edge). According to an embodiment of the disclosure, the electronic device 101 may determine whether the first user gesture 740 is held (e.g., whether the second user gesture is detected) for a designated time (e.g., 3 seconds) in the designated area 760 (e.g., the upper edge of the flexible display exposed to the outside). According to an embodiment of the disclosure, the electronic device 101 may determine whether the first user gesture 740 is held in the designated area 760 (e.g., the upper edge of the flexible display exposed to the outside) for a designated time or more and then released.

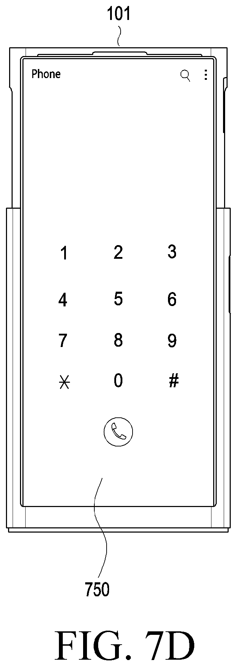

According to an embodiment of the disclosure, in operation 630, the electronic device 101 may insert the second housing 202 into the first housing 201 (e.g., switching from the open state to the fully closed state) or draw out the second housing 202 to the outside of the first housing 201 by a designated length (e.g., switching from the fully closed state to the fully opened state) based on the determination of operation 620. According to an embodiment of the disclosure, the electronic device 101 may draw out the second housing 202 to the outside of the first housing 201 by the designated length (e.g., switching from the fully closed state to the fully opened state), as shown in FIG. 7D, based on determining that the first user gesture 740 is held in the designated area 760 (e.g., the upper edge of the flexible display exposed to the outside) for the designated time or more and then released while the electronic device 101 is in the fully closed state. According to an embodiment of the disclosure, the electronic device 101 may change the application execution screen area (e.g., a window) based on the first user gesture 740 on the first visual object 730. According to an embodiment of the disclosure, the electronic device 101 may change the state of the electronic device 200 while maintaining the multi-window mode based on obtaining a user input to an input device (e.g., the key input device 245 or 1041) for changing the state of the electronic device 200 (e.g., switching from the closed state to the opened state and/or switching from the opened state to the closed state). In this case, the electronic device 101 according to an embodiment of the disclosure may at least partially modify the attribute of the screen to be suitable for the state-changed electronic device 200 and display the application execution screen (e.g., the first execution screen 710 and the second execution screen 720).

According to an embodiment of the disclosure, in operation 640, the electronic device 101 may display a second screen (e.g., a fourth execution screen 750 of the first application) different from the first screen on the shape-changed electronic device 101 according to operation 630. According to an embodiment of the disclosure, based on detecting that the first user gesture 740 is released in the designated area 760 (e.g., the upper edge of the flexible display exposed to the outside), the electronic device 101 may display (e.g., terminate the multi-window mode), as the full screen, the fourth execution screen 750 having an attribute (e.g., size, type and/or resolution of visual object) at least partially different from the third execution screen 730 on the extended flexible display (e.g., the display 203) area. When detecting a gesture to move the first visual object 730 to the designated area 760 (e.g., an area around the lower edge of the flexible display exposed (e.g., a rectangular area having a height of Y3)) while displaying the execution screens of a plurality of applications in the multi-window mode in the opened state (e.g., the fully opened state) of the electronic device 101, the electronic device 101 may switch its state from the opened state to the closed state and display (e.g., terminate the multi-window mode) the execution screen of any one application as the full screen. According to an embodiment of the disclosure, operations 630 and 640 may be performed substantially simultaneously (e.g., changing the state of the electronic device 101 while extending the application execution screen in real-time) or may be performed at different times (e.g., displaying the application execution screen after the state of the electronic device 101 is changed).

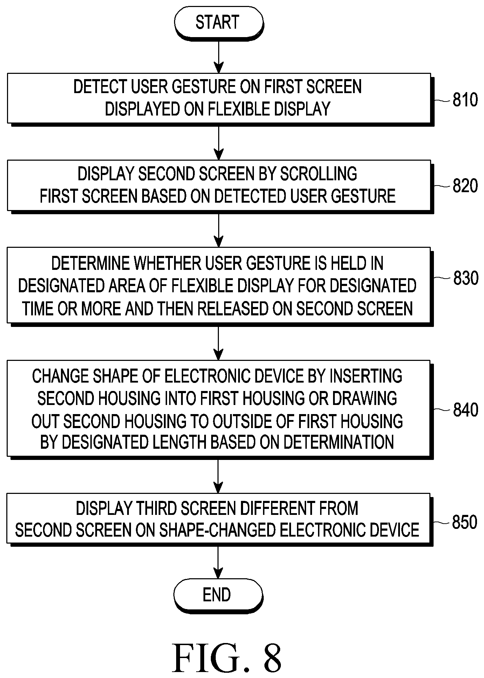

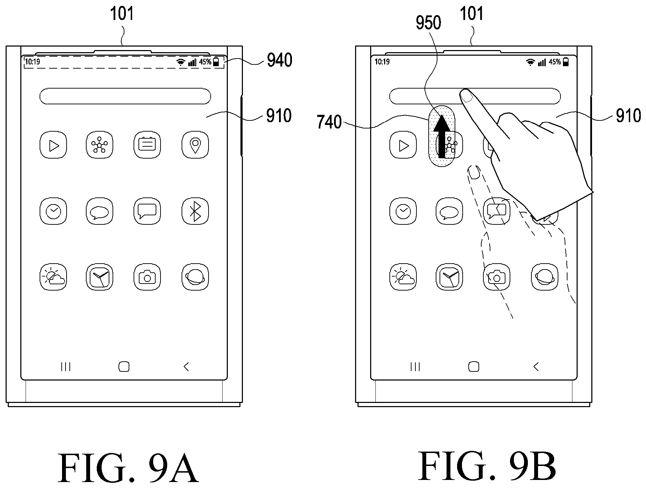

FIG. 8 is an exemplary view illustrating a function or operation of changing the shape of an electronic device 101 (e.g., changing from a closed state to a fully opened state) while scrolling the screen being displayed according to detecting a first user gesture 740 by the electronic device 101. FIGS. 9A to 9D are exemplary views illustrating the function or operation described in FIG. 8 from the perspective of a user interface.

Referring to FIG. 8, in operation 810, the electronic device 101 may detect a first user gesture 740 on a first screen (e.g., a fifth execution screen 910 of the third application (e.g., a launcher application)) displayed on the flexible display (e.g., the display 203). According to an embodiment of the disclosure, the fifth execution screen 910 of the third application may be displayed substantially as the full screen on the flexible display (e.g., the display 203) where a specific application execution screen is exposed as shown in FIG. 9A. According to an embodiment of the disclosure, a status bar area 940 (e.g., an area where the current time or battery status is displayed) may be displayed overlapping the fifth execution screen 910 on the fifth execution screen 910 or may be displayed in a separate area. According to an embodiment of the disclosure, the first user gesture 740 may include a drag gesture in a designated direction (e.g., the first direction 950) on the fifth execution screen 910 as shown in FIG. 9B. According to an embodiment of the disclosure, the first user gesture 740 may include other various gestures than the drag gesture, such as a swipe gesture, a tap gesture, a touch gesture through an external electronic device (e.g., a stylus pen), and/or a hovering gesture.

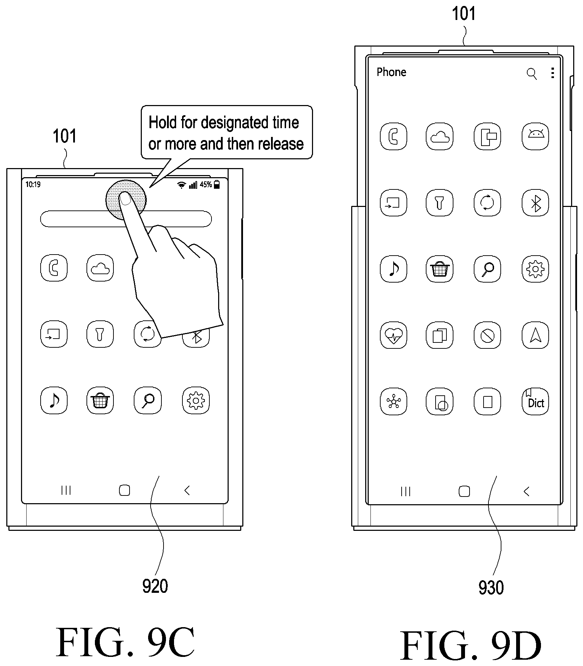

According to an embodiment of the disclosure, in operation 820, the electronic device 101 may display a second screen (e.g., the sixth execution screen 920 of the third application (e.g., a launcher application)) by scrolling the first screen (e.g., the fifth execution screen 910 of the third application (e.g., a launcher application)) based on the first user gesture 740 detected according to operation 810. According to an embodiment of the disclosure, as shown in FIG. 9C, the electronic device 101 may display the sixth execution screen 920 where the fifth execution screen 910 has been scrolled according to the first user gesture 740, on the flexible display (e.g., the display 203).

According to an embodiment of the disclosure, in operation 830, based on detecting the first user gesture 740, the electronic device 101 may determine whether the first user gesture 740 is held in a designated area 760 of the flexible display (e.g., the display 203) for a designated time or more and then released. According to an embodiment of the disclosure, as shown in FIG. 9B, the first user gesture 740 may include a drag gesture starting from an area of the fifth execution screen 910 toward the designated area 760 (e.g., an area around the upper edge of the display 203, which is a rectangular area having a height of Y2-Y1). According to an embodiment of the disclosure, as shown in FIG. 9C, the designated area 760 may include an area around the edge (e.g., upper edge) of the flexible display (e.g., the display 203) exposed to the outside. According to an embodiment of the disclosure, the designated area 760 may be defined previously (e.g., at the time of manufacturing the electronic device 101) or may be defined by the user. According to an embodiment of the disclosure, the electronic device 101 may determine whether the first user gesture 740 is held for a designated time (e.g., 3 seconds) in the designated area 760 (e.g., the upper edge of the flexible display exposed to the outside) in a state in which the sixth execution screen 920 is displayed. According to an embodiment of the disclosure, the electronic device 101 may determine whether the first user gesture 740 is held in the designated area 760 (e.g., the upper edge of the flexible display exposed to the outside) for a designated time or more and then released.

According to an embodiment of the disclosure, in operation 840, the electronic device 101 may insert the second housing 202 into the first housing 201 (e.g., switching from the open state to the fully closed state) or draw out the second housing 202 to the outside of the first housing 201 by a designated length (e.g., switching from the closed state to the fully opened state) based on the determination of operation 830. For example, according to an embodiment of the disclosure, the electronic device 101 may draw out the second housing 202 to the outside of the first housing 201 by the designated length (e.g., switching from the closed state to the fully opened state), as shown in FIG. 9D, based on determining that the first user gesture 740 is held in the designated area 760 (e.g., the upper edge of the flexible display exposed to the outside) for the designated time or more and then released while the electronic device 101 is in the fully closed state.

According to an embodiment of the disclosure, in operation 850, the electronic device 101 may display a third screen (e.g., the seventh execution screen 930 of the third application) different from the second screen (e.g., the sixth execution screen 920 of the third application (e.g., a launcher application) on the shape-changed electronic device 101 according to operation 840. According to an embodiment of the disclosure, based on detecting that the first user gesture 740 is released in the designated area 760 (e.g., the upper edge of the flexible display exposed to the outside), the electronic device 101 may display, as the full screen, the seventh execution screen 930 having an attribute (e.g., size, type and/or resolution of visual object) different from the sixth execution screen 920 on the extended flexible display (e.g., the display 203) area. When detecting a gesture to move to the designated area 760 (e.g., a rectangular area having a height of Y3, which is an area around the lower edge of the flexible display exposed) while the seventh execution screen 930 is displayed in the opened state (e.g., the fully opened state) of the electronic device 101, the electronic device 101 may switch its state from the opened state to the closed state and display the execution screen (e.g., the fifth execution screen 910). According to an embodiment of the disclosure, operations 840 and 850 may be performed substantially simultaneously (e.g., changing the state of the electronic device 101 while extending the application execution screen in real-time) or may be performed at different times (e.g., displaying the application execution screen after the state of the electronic device 101 is changed).

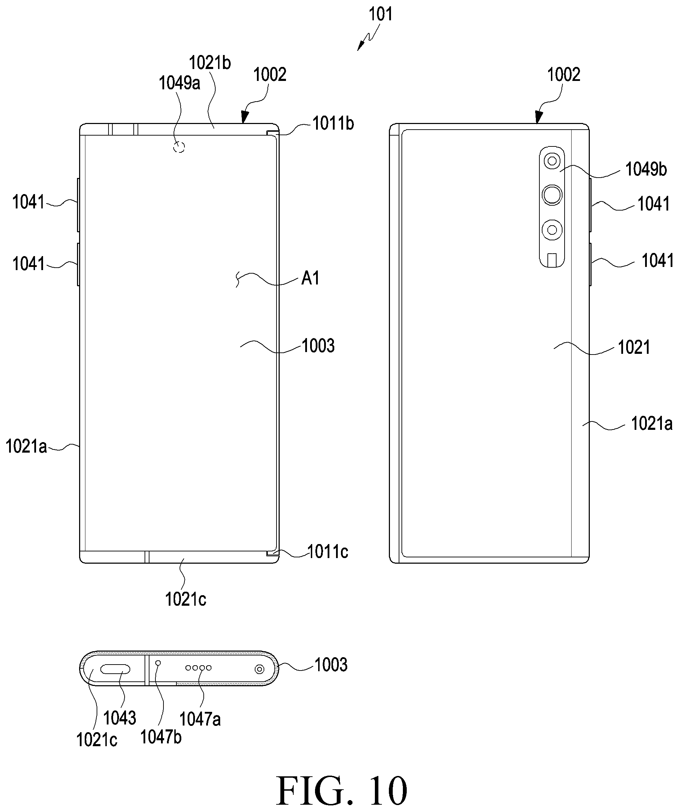

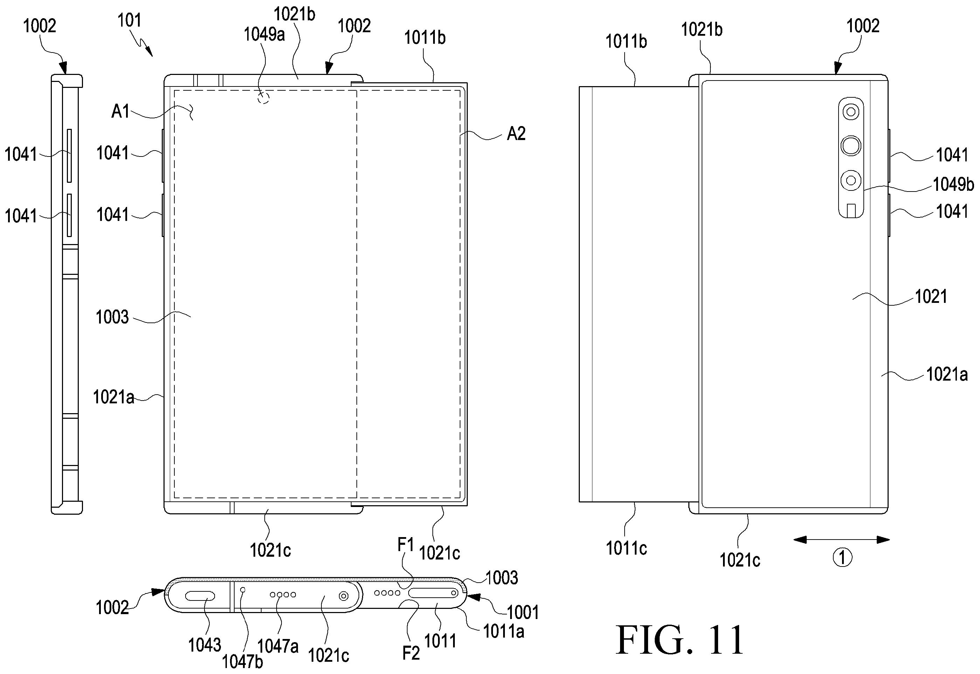

FIGS. 10 and 11 are exemplary views illustrating an electronic device 101 having a display extension shape in a direction different from the shape of the electronic device 101 described in relation to FIG. 2.

FIGS. 10 and 11 illustrate a structure in which the display 203 (e.g., flexible display) is extended to the right when the electronic device 101 is viewed from the front. However, the extending direction of the display 1003 is not limited to one direction (e.g., left direction), but design changes may be made so that the display 203 is extendable to the left and/or in two directions.

The state shown in FIG. 10 may be defined as a first housing 1001 being closed with respect to a second housing 1002, and the state shown in FIG. 11 may be defined as the first housing 1001 being open with respect to the second housing 1002. According to an embodiment, the "closed state" or "opened state" may be defined as a closed or opened state of the electronic device.

Referring to FIGS. 10 and 11, the electronic device 101 may include housings 1001 and 1002. The housings 1001 and 1002 may include a first housing 1002 and a second housing 1001 disposed to be movable with respect to the first housing 1002. According to an embodiment, the electronic device 101 may be interpreted as having a structure in which the first housing 1002 is slidably disposed on the second housing 1001. According to an embodiment, the second housing 1001 may be disposed to perform reciprocating motion by a predetermined distance in a predetermined direction with respect to the first housing 1002, for example, a direction indicated by an arrow ①.

According to an embodiment, the second housing 1001 may be referred to as, for example, a first structure, a slide unit, or a slide housing, and may be disposed to reciprocate on the first housing 1002. According to an embodiment, the second housing 1001 may receive various electrical/electronic components, such as a circuit board or a battery. The first housing 1002 may be referred to as, e.g., a second structure, a main part, or a main housing, and may guide the movement of the second housing 1001. A portion (e.g., the first display area A1) of the display 1003 may be seated on the second housing 1001. According to an embodiment, another portion (e.g., the second display area A2) of the display 1003 may be received into the inside of the first housing 1002 (e.g., a slide-in motion) or be exposed to the outside of the first housing 1002 (e.g., a slide-out motion) as the second housing 1001 moves (e.g., slides) with respect to the first housing 1002. According to an embodiment, a motor, a speaker, a sim socket, and/or a sub circuit board electrically connected with a main circuit board may be disposed in the second housing 1001. A circuit board on which electrical components, such as an application processor (AP) or a communication processor (CP) are mounted may be disposed in the second housing 1002.

According to various embodiments, the second housing 1001 may include a first cover member 1011 (e.g., a slide plate). The first cover member 1011 may include a first surface (e.g., the first surface F1 of FIG. 11) forming at least a portion of the first cover member 1011 and a second surface F2 facing away from the first surface F1. According to an embodiment, the first cover member 1011 may support at least a portion of the display 1003 (e.g., the first display area A1).

According to various embodiments, the first housing 1002 may include a second plate 1021 (e.g., main case), a 2-1th side wall 1021a extending from the second plate 1021, a 2-2th side wall 1021b extending from the 2-1th side wall 1021a and the second plate 1021, and a 2-3th side wall 1021c extending from the 2-1th side wall 1021a and the second plate 1021 and disposed substantially parallel to the 2-2th side wall 1021b. According to an embodiment, the 2-2th sidewall 1021b and the 2-3th sidewall 1021c may be formed substantially perpendicular to the 2-1th sidewall 1021a. According to an embodiment, the second plate 1021, the 2-1th sidewall 1021a, the 2-2nd sidewall 1021b, and the 2-3th sidewall 1021c may be formed to have an opening in one surface (e.g., the front surface) to receive at least a portion of the second housing 1001. For example, the second housing 1001 may be coupled to the second housing 1002 in a state in which it is at least partially surrounded, and may be slide in a direction parallel to the first surface F1 or the second surface F2, for example, direction ① indicated with the arrow while being guided by the second housing 1002. According to an embodiment, the second plate 1021, the 2-1th sidewall 1021a, the 2-2th sidewall 1021b, and/or the 2-3th sidewall 1021c may be integrally formed. According to another embodiment, the second plate 1021, the 2-1th sidewall 1021a, the 2-2th sidewall 1021b, and/or the 2-3th sidewall 1021c may be formed as separate components and be combined or assembled.

According to various embodiments, the second housing 1001 may be moved into an opened state and closed state with respect to the second housing 1002 in a first direction (e.g., direction ①) parallel to the 2-2th sidewall 1021b or the 2-3th sidewall 1021c. The second housing 1001 may be moved to be positioned at a first distance from the 2-1th sidewall 1021a in the closed state and, in the opened state, may be moved to be positioned at a second distance greater than the first distance from the 2-1th sidewall 1021a. According to various embodiments, the electronic device 101 may include a display 1003, a key input device 1041, a connector hole 1043, audio modules 1047a and 1047b, or camera modules 1049a and 1049b. Although not shown, the electronic device 101 may further include an indicator (e.g., a light emitting diode (LED) device) or various sensor modules.

According to various embodiments, the display 1003 may include a first display area A1 and a second display area A2. According to an embodiment, the first display area A1 may be disposed on the second housing 1002. The second display area A2 may extend from the first display area A1. As the second housing 1001 slides, at least a portion of the first display area A1 may be inserted or received into the first housing 1002 (e.g., a structure), or may be exposed to the outside of the first housing 1002.

According to various embodiments, the second display area A2 may be substantially moved while being guided by an area (e.g., the curved surface) of the second housing 1001 and may be thus received into the first housing 1002, or received into a space formed between the second housing 1001 and the first housing 1002 or exposed to the outside. According to an embodiment, the second display area A2 may move based on a slide of the second housing 1001 in the first direction (e.g., the direction indicated by the arrow ①). For example, while the second housing 1001 slides, a portion of the second display area A2 may be deformed into a curved shape at a position corresponding to the curved surface of the second housing 1001.

According to various embodiments, when viewed from above the first plate 1011 (e.g., slide plate), if the second housing 1001 moves from the closed state to the opened state, the second display area A2 may be exposed to the outside of the first housing 1002 to be substantially coplanar with the first display area A1. The display 1003 may be disposed to be coupled with, or adjacent, a touch detecting circuit, a pressure sensor capable of measuring the strength (pressure) of touches, and/or a digitizer for detecting a magnetic field-type stylus pen. In one embodiment, the second display area A2 may be at least partially received inside the first housing 1002, and a portion of the second display area A2 may be visually exposed to the outside even in the state shown in FIG. 10 (e.g., the closed state). According to one of various embodiments, the electronic device 101 may include at least one hinge structure. The hinge structure may connect the second housing 1001 with the first housing 1002. For example, the hinge structure may be connected to the first plate 1011 and the second plate 221. According to an embodiment, the hinge structure may transfer a driving force for guiding the slide of the second housing 1001 to the second housing 1001. For example, the hinge structure may include an elastic material (e.g., a spring) and, based on the slide of the second housing 1001, provide an elastic force in the first direction (e.g., direction ① of FIG. 11). According to an embodiment, the hinge structure may be excluded.

According to various embodiments, the key input device 1041 may be positioned in one area of the second housing 1001. Depending on the appearance and the state of use, the electronic device 101 may be designed to omit the illustrated key input device 1041 or to include additional key input device(s). According to an embodiment, the electronic device 101 may include a key input device (not shown), e.g., a home key button or a touchpad disposed around the home key button. According to another embodiment, at least a portion of the key input device 1041 may be disposed on the 2-1th side wall 1021a, the 2-2th side wall 1021b, or the 2-3th side wall 1021c of the first housing 1002.

According to various embodiments, the connector hole 1043 may be omitted or may receive a connector (e.g., a universal serial bus (USB) connector) for transmitting and receiving power and/or data with an external electronic device. Although not shown, the electronic device 101 may include a plurality of connector holes 1043, and some of the plurality of connector holes 1043 may function as connector holes for transmitting/receiving audio signals with an external electronic device. In the illustrated embodiment, the connector hole 1043 is disposed in the 2-3th sidewall 1021c but is not limited thereto but, without limitations thereto, the connector hole 1043 or a connector hole not shown may be disposed in the 2-1th sidewall 1021a or the 2-2th sidewall 1021b.

According to various embodiments, the audio modules 1047a and 1047b may include at least one speaker hole 1047a or at least one microphone hole 1047b. One of the speaker holes 1047a may be provided as a receiver hole for voice calls, and the other may be provided as an external speaker hole. The electronic device 101 may include a microphone for obtaining sound. The microphone may obtain external sound of the electronic device 101 through the microphone hole 1047b. According to an embodiment, the electronic device 101 may include a plurality of microphones to detect the direction of sound. According to an embodiment, the electronic device 101 may include an audio module in which the speaker hole 1047a and the microphone hole 1047b are implemented as one hole or may include a speaker without the speaker hole 1047a (e.g., a piezo speaker).

According to various embodiments, the camera modules 1049a and 1049b may include a first camera module 1049a and/or a second camera module 1049b. The second camera module 1049b may be positioned in the second housing 1001 and may capture a subject in a direction opposite to the first display area A1 of the display 1003. The electronic device 101 may include a plurality of camera modules 1049a and 1049b. For example, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 1049a and 1049b may include one or more lenses, an image sensor, and/or an image signal processor. The first camera module 1049a may be disposed to face in the same direction as the display 1003. For example, the first camera module 1049a may be disposed in an area overlapping the display 1003 or around the first display area A1 and, when disposed in the area overlapping the display 1003, the first camera module 249a may capture the object through the display 1003. According to an embodiment, the first camera module 1049a may include an under display camera (UDC) that has a screen display area (e.g., the first display area A1) that may not be visually exposed but hidden.

According to various embodiments, an indicator (not shown) of the electronic device 101 may be disposed on the second housing 1001 or the first housing 1002, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

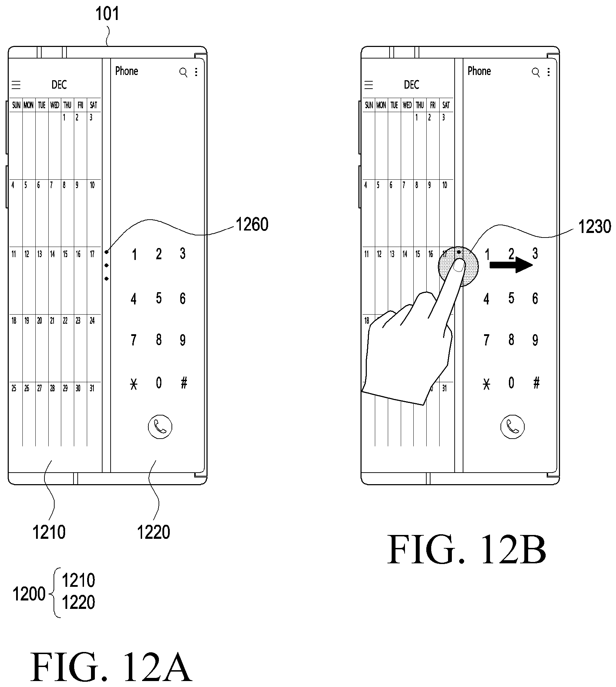

FIGS. 12A to 12D are exemplary views illustrating that the function or operation described in FIG. 6 is performed by an electronic device 101 having the form shown in FIGS. 10 and 11 from a user interface perspective.

Referring to FIGS. 12A to 12D, the electronic device 101 may detect a third user gesture 1230 on a fourth screen 1200 displayed on the flexible display (e.g., the display 1003). According to an embodiment of the disclosure, as shown in FIG. 12A, the fourth screen 1200 may include an eighth execution screen 1210 of a first application (e.g., a calendar application), a ninth execution screen 1220 of a second application (e.g., a call application), and/or a second visual object 1260 displayed at a boundary between the eighth execution screen 1210 and the ninth execution screen 1220 to indicate the boundary between the eighth execution screen 1210 and the ninth execution screen 1220, displayed through a multi-window mode (e.g., a display mode in which the respective execution screens of a plurality of applications are simultaneously displayed). According to an embodiment of the disclosure, as shown in FIG. 12B, the second user gesture 1230 may include a drag gesture in a designated direction (e.g., the second direction as the right direction) on the fourth screen 1200 (e.g., a second visual object 1260). According to an embodiment of the disclosure, the second user gesture 1230 may include other various gestures than the drag gesture, such as a swipe gesture, a tap gesture, a touch gesture through an external electronic device (e.g., a stylus pen), and/or a hovering gesture.

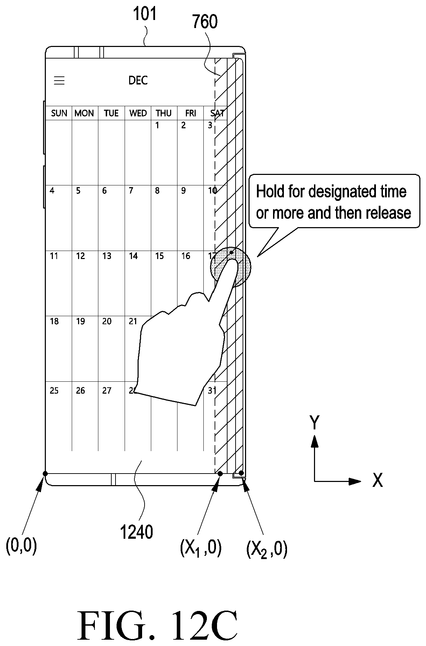

According to an embodiment of the disclosure, the electronic device 101 may change the screen ratio of the multi-window mode and display the same based on detecting the second user gesture 1230 and then determine whether the first user gesture 1230 is held and then released in a designated area 760 of the flexible display (e.g., the display 1003) for a designated time or more. According to an embodiment of the disclosure, as shown in FIG. 12B, the second user gesture 1230 may include a drag gesture to drag the second visual object 1260 to the designated area 760 of the flexible display (e.g., the display 1003). According to an embodiment of the disclosure, as shown in FIG. 12C, the designated area 760 may include an area around the edge (e.g., right edge) of the flexible display (e.g., the display 1003) exposed to the outside. According to an embodiment of the disclosure, the designated area 760 may be defined previously (e.g., at the time of manufacturing the electronic device 101) or may be defined by the user. According to an embodiment of the disclosure, the electronic device 101 may determine whether the second user gesture 1230 is held for a designated time (e.g., 3 seconds) in the designated area 760 (e.g., the upper edge of the flexible display exposed to the outside). According to an embodiment of the disclosure, the electronic device 101 may determine whether the second user gesture 1230 is held in the designated area 760 (e.g., the upper edge of the flexible display exposed to the outside) for a designated time or more and then released.

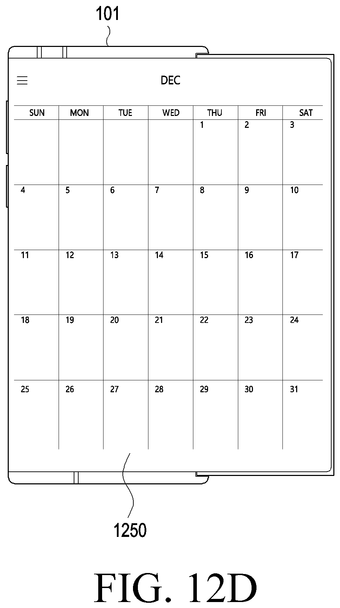

According to an embodiment of the disclosure, the electronic device 101 may insert the second housing 1002 into the first housing 1001 (e.g., switching from the open state to the closed state) or draw out the second housing 1002 to the outside of the first housing 1001 by a designated length (e.g., switching from the closed state to the fully opened state). For example, according to an embodiment of the disclosure, the electronic device 101 may draw out the second housing 1002 to the outside of the first housing 1001 by the designated length (e.g., switching from the closed state to the opened state), as shown in FIG. 12D, based on determining that the second user gesture 1230 is held in the designated area 760 (e.g., the right edge of the flexible display exposed to the outside) for the designated time or more and then released while the electronic device 101 is in the closed state. According to an embodiment of the disclosure, the electronic device 101 may change the application execution screen area (e.g., a window) based on the second user gesture 1230 on the second visual object 1260. According to an embodiment of the disclosure, as shown in FIG. 12C, the electronic device 101 may display, in the enlarged application execution screen area, a tenth execution screen 1240 of the first application, in which the attributes (e.g., the sizes of various objects included in the eighth execution screen 1210, types of visual objects, and/or resolution or such visual elements) of the eighth execution screen 1210 of the first application have been changed, based on detecting the second user gesture 1230 to move the second visual object 1260 in the second direction (e.g., the direction toward the right edge).

According to an embodiment of the disclosure, the electronic device 101 may display a fifth screen (e.g., an eleventh screen 1250 of the first application) different from the fourth screen 1200 on the shape-changed electronic device 101. According to an embodiment of the disclosure, based on detecting that the second user gesture 1230 is released in the designated area 760 (e.g., the right edge of the flexible display exposed to the outside), the electronic device 101 may display (e.g., terminate the multi-window mode), as the full screen, the eleventh execution screen 1250 having an attribute (e.g., size, type and/or resolution of visual object) different from the tenth execution screen 1240 on the extended flexible display (e.g., the display 1003) area. In this case, the electronic device 101 may terminate the multi-window mode. Although not shown in the drawings, when detecting a gesture to move the second visual object 1260 to the designated area 760 (e.g., an area around the left edge of the flexible display exposed) while displaying the execution screens of a plurality of applications in the multi-window mode in the opened state (e.g., the fully opened state) of the electronic device 101, the electronic device 101 may switch its state from the opened state to the closed state and display (e.g., terminate the multi-window mode) the execution screen of any one application as the full screen. According to an embodiment of the disclosure, the function or operation of changing the state of the electronic device 101 and the function or operation of displaying the application execution screen (e.g., a screen in an intermediate state between the eighth execution screen 1210 and the tenth execution screen 1240) may be performed substantially simultaneously (e.g., changing the state of the electronic device 101 while extending the application execution screen in real-time) or may be performed at different times (e.g., displaying the application execution screen after the state of the electronic device 101 is changed).

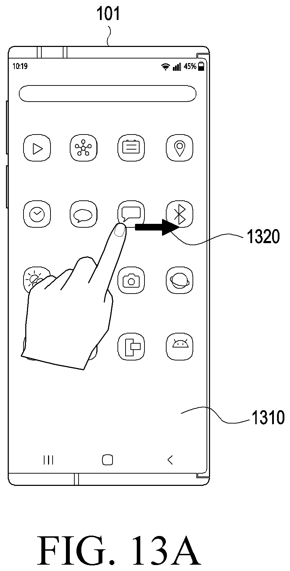

FIGS. 13A to 13C are exemplary views illustrating that the function or operation described in FIG. 8 is performed by an electronic device 101 having the form shown in FIGS. 10 and 11 from a user interface perspective.

Referring to FIGS. 13A to 13C, the electronic device 101 may detect a third user gesture 1320 on a sixth screen (e.g., a twelfth execution screen 1310 of the third application (e.g., a launcher application)) displayed on the flexible display (e.g., the display 1003). According to an embodiment of the disclosure, the twelfth execution screen 1310 of the third application may be displayed substantially as the full screen on the flexible display (e.g., the display 1003) where a specific application execution screen is exposed as shown in FIG. 13A. According to an embodiment of the disclosure, a status bar area (e.g., an area where the current time or battery status is displayed) may be displayed overlapping the twelfth execution screen 1310 on the twelfth execution screen 1310 or may be displayed in a separate area. According to an embodiment of the disclosure, the third user gesture 1320 may include a drag gesture in a designated direction (e.g., the second direction as the right direction) on the twelfth execution screen 1310 as shown in FIG. 13A. According to an embodiment of the disclosure, the third user gesture 1320 may include other various gestures than the drag gesture, such as a swipe gesture, a tap gesture, a touch gesture through an external electronic device (e.g., a stylus pen), and/or a hovering gesture.

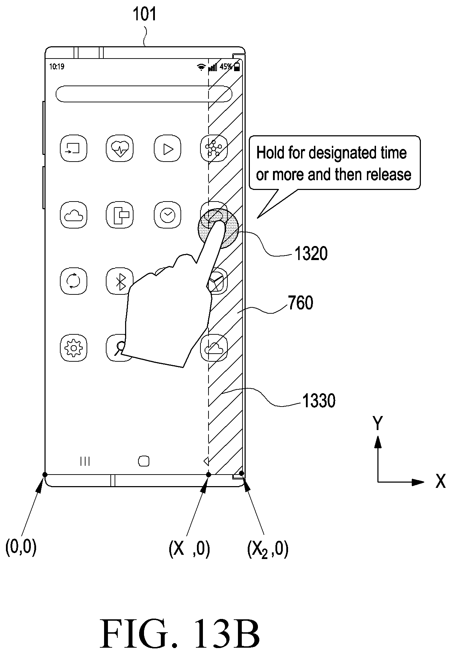

According to an embodiment of the disclosure, the electronic device 101 may display a seventh screen (e.g., the thirteenth execution screen 1330 of the third application (e.g., a launcher application)) by scrolling the sixth screen (e.g., the twelfth execution screen 1310 of the third application (e.g., a launcher application)) based on the third user gesture 1320. According to an embodiment of the disclosure, as shown in FIG. 13B, the electronic device 101 may display the thirteenth execution screen 1330 where the twelfth execution screen 1310 has been scrolled according to the third user gesture 1320, on the flexible display (e.g., the display 1003).

According to an embodiment of the disclosure, based on detecting the third user gesture 1320, the electronic device 101 may determine whether the third user gesture 1320 is held in a designated area 760 of the flexible display (e.g., the display 1003) for a designated time or more and then released. According to an embodiment of the disclosure, as shown in FIGS. 13A and 13B, the first user gesture 740 may include a drag gesture starting in an area of the twelfth execution screen 1310 toward a designated area 760 (e.g., the right edge of the display 1003). According to an embodiment of the disclosure, as shown in FIG. 13B, the designated area 760 may include an around-edge area (e.g., an area around the right edge, which is a rectangular area having a height of X2-X1) of the flexible display (e.g., the display 1003) exposed to the outside. According to an embodiment of the disclosure, the designated area 760 may be defined previously (e.g., at the time of manufacturing the electronic device 101) or may be defined by the user. According to an embodiment of the disclosure, the electronic device 101 may determine whether the third user gesture 1320 is held for a designated time (e.g., 3 seconds) in the designated area 760 (e.g., the upper edge of the flexible display exposed to the outside) in a state in which the thirteenth execution screen 1330 is displayed. According to an embodiment of the disclosure, the electronic device 101 may determine whether the third user gesture 1320 is held in the designated area 760 (e.g., the upper edge of the flexible display exposed to the outside) for a designated time or more and then released.

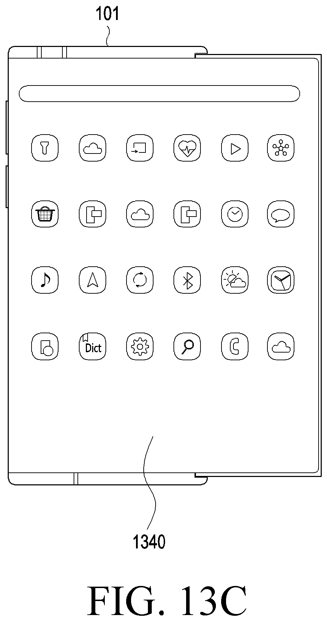

According to an embodiment of the disclosure, the electronic device 101 may insert the second housing 1002 into the first housing 1001 (e.g., switching from the open state to the fully closed state) or draw out the second housing 1002 to the outside of the first housing 1001 by a designated length (e.g., switching from the fully closed state to the fully opened state) based on the determination of whether it is released. For example, according to an embodiment of the disclosure, the electronic device 101 may draw out the second housing 1002 to the outside of the first housing 1001 by the designated length (e.g., switching from the fully closed state to the fully opened state), as shown in FIG. 13C, based on determining that the third user gesture 1320 is held in the designated area 760 (e.g., the upper edge of the flexible display exposed to the outside) for the designated time or more and then released while the electronic device 101 is in the fully closed state.

According to an embodiment of the disclosure, the electronic device 101 may display an eighth screen (e.g., the fourteenth execution screen 1340 of the third application) different from the seventh screen (e.g., the thirteenth execution screen 1330 of the third application (e.g., a launcher application) on the shape-changed electronic device 101. According to an embodiment of the disclosure, based on detecting that the third user gesture 1320 is released in the designated area 760 (e.g., the right edge of the flexible display exposed to the outside), the electronic device 101 may display, as the full screen, the fourteenth execution screen 1340 having an attribute (e.g., size, type and/or resolution of visual object) different from the thirteenth execution screen 1330 on the extended flexible display (e.g., the display 1003) area. Although not shown in the drawings, according to an embodiment, when detecting a gesture to move to the designated area 760 (e.g., an area around the lower edge of the flexible display exposed) while the fourteenth execution screen 1340 is displayed in the opened state (e.g., the fully opened state) of the electronic device 101, the electronic device 101 may switch its state from the opened state to the fully closed state and display the execution screen (e.g., the twelfth execution screen 1310). According to an embodiment of the disclosure, the function or operation of changing the state of the electronic device 101 and the function or operation of displaying the application execution screen (e.g., a screen in an intermediate state between the thirteenth execution screen 1330 and the fourteenth execution screen 1340) may be performed substantially simultaneously (e.g., changing the state of the electronic device 101 while extending the application execution screen in real-time) or may be performed at different times (e.g., displaying the application execution screen after the state of the electronic device 101 is changed).

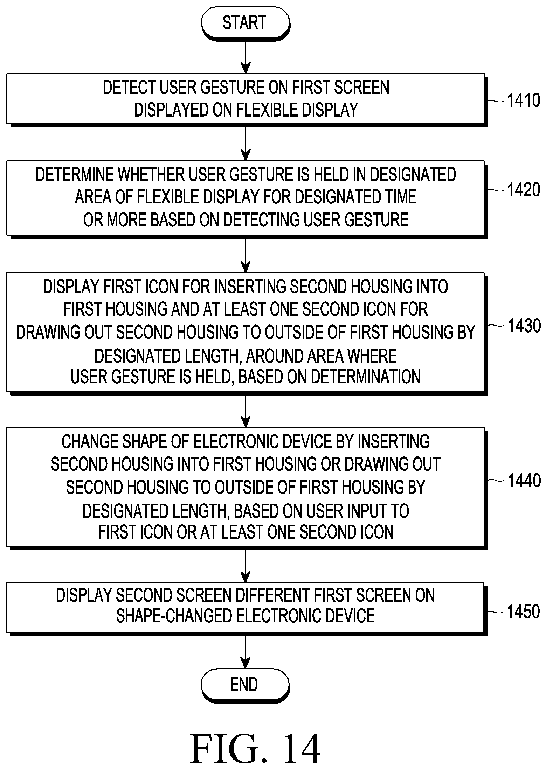

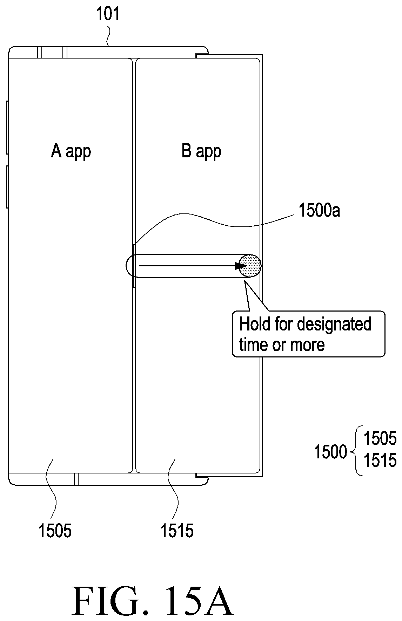

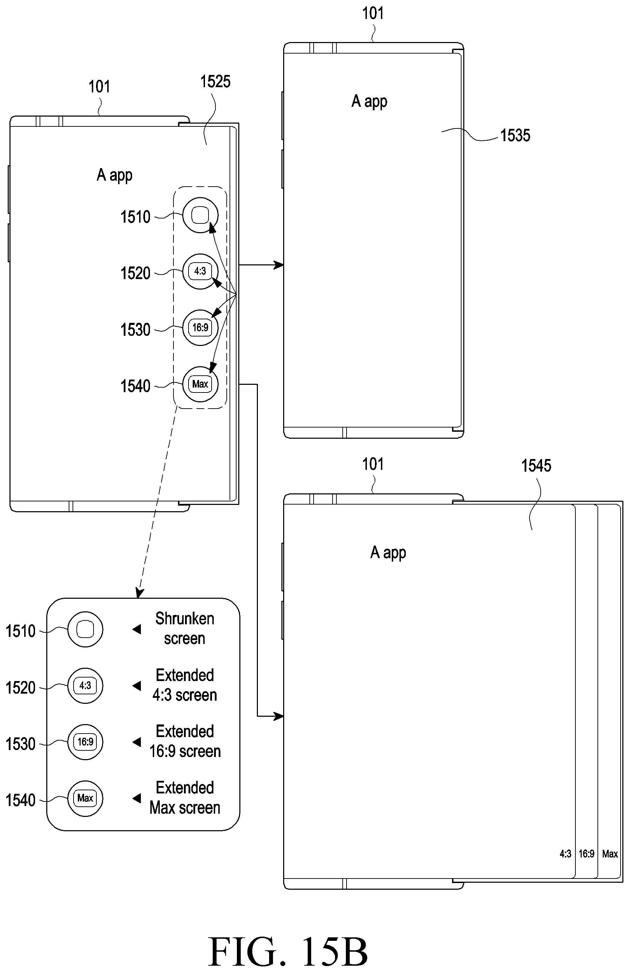

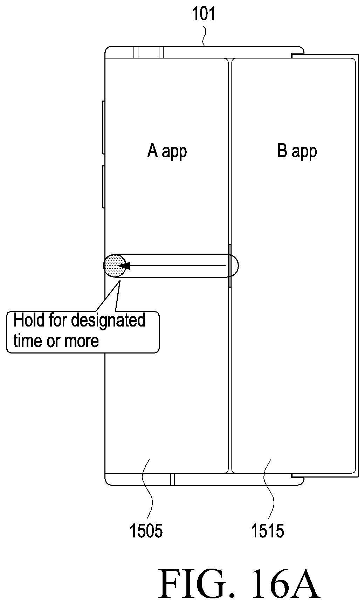

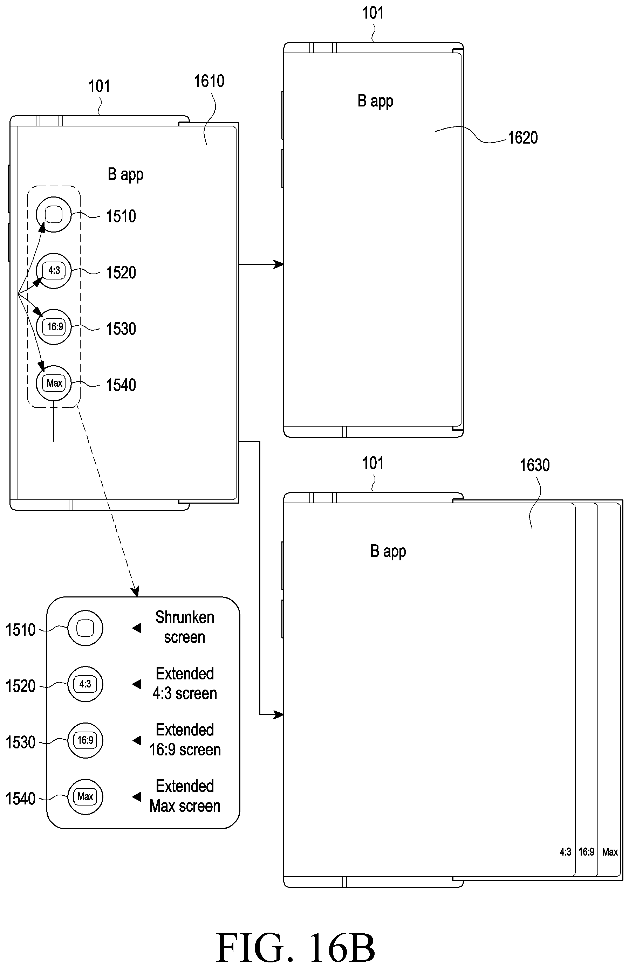

FIG. 14 is an exemplary view illustrating a function or operation of changing the shape of an electronic device 101 based on an input to at least one icon (e.g., the first icon 1510, the second icon 1520, the third icon 1530, and/or the fourth icon 1540) displayed on the electronic device 101. FIGS. 15A and 15B are exemplary views illustrating a function or operation of displaying at least one icon (e.g., the first icon 1510, the second icon 1520, the third icon 1530, and/or the fourth icon 1540) around an edge of a display (e.g., the display 1003) corresponding to a first direction when a user gesture (e.g., the second user gesture 1230) in the first direction (e.g., the right direction) is detected from a user interface perspective, in relation to FIG. 14. FIGS. 16A and 16B are exemplary views illustrating a function or operation of displaying at least one icon (e.g., the first icon 1510, the second icon 1520, the third icon 1530, and/or the fourth icon 1540) around an edge of a display (e.g., the display 1003) corresponding to a second direction when a user gesture (e.g., the second user gesture 1230) in the second direction (e.g., the left direction) is detected from a user interface perspective, in relation to FIG. 14.

Referring to FIG. 14, in operation 1410, the electronic device 101 may detect a user gesture (e.g., the second user gesture 1230) on a first screen (e.g., the ninth screen 1500) displayed on the flexible display (e.g., the display 1003). According to an embodiment of the disclosure, as shown in FIG. 15A, the ninth screen 1500 may include a fifteenth execution screen 1505 of a first application (e.g., a calendar application), a sixteenth execution screen 1515 of a second application (e.g., a call application), and/or a third visual object 1500a displayed at a boundary between the fifteenth execution screen 1505 and the sixteenth execution screen 1515 to indicate the boundary between the fifteenth execution screen 1505 and the sixteenth execution screen 1515, displayed through a multi-window mode (e.g., a display mode in which the respective execution screens of a plurality of applications are simultaneously displayed). According to an embodiment of the disclosure, as shown in FIG. 15A, the user gesture (e.g., the second user gesture 1230) may include a drag gesture in a designated direction (e.g., the second direction as the right direction) on the ninth screen 1500 (e.g., a third visual object 1500a). According to an embodiment of the disclosure, as shown in FIG. 16A, the user gesture (e.g., the second user gesture 1230) may include a drag gesture in a designated direction (e.g., the third direction as the left direction) on the ninth screen 1500 (e.g., a third visual object 1500a). According to an embodiment of the disclosure, the user gesture (e.g., the second user gesture 1230) may include other various gestures than the drag gesture, such as a swipe gesture, a tap gesture, a touch gesture through an external electronic device (e.g., a stylus pen), and/or a hovering gesture.

According to an embodiment of the disclosure, in operation 1420, based on detecting the user gesture, the electronic device 101 may determine whether the user gesture is held in a designated area 760 of the flexible display (e.g., the display 1003) for a designated time or more and then released. According to an embodiment of the disclosure, as shown in FIGS. 15A and 16A, the user gesture (e.g., the second user gesture 1230) may include a drag gesture to drag the third visual object 1500a to the designated area 760 of the flexible display (e.g., the display 1003). According to an embodiment of the disclosure, the designated area 760 may include an area around the edge (e.g., right edge) of the flexible display (e.g., the display 1003) exposed to the outside as shown in FIG. 15A, or an area around the edge (e.g., left edge) of the flexible display (e.g., the display 1003) exposed to the outside as shown in FIG. 16A. According to an embodiment of the disclosure, the designated area 760 may be defined previously (e.g., at the time of manufacturing the electronic device 101) or may be defined by the user. According to an embodiment of the disclosure, the electronic device 101 may determine whether the user gesture is held for a designated time (e.g., 3 seconds) in the designated area 760 (e.g., the right edge of the flexible display exposed to the outside). According to an embodiment of the disclosure, the electronic device 101 may determine whether the user gesture is held in the designated area 760 (e.g., the right edge of the flexible display exposed to the outside) for a designated time or more.

According to an embodiment of the disclosure, in operation 1430, the electronic device 101 may display a first icon 1510 for inserting the second housing (e.g., the second housing 1002) into the first housing (e.g., the first housing 1001) and at least one icon (e.g., the second icon 1520, the third icon 1530, and/or the fourth icon 1540) for drawing out the second housing (e.g., the second housing 1002) to the outside of the first housing (e.g., the first housing 1001) by a designated length, around the area where the user gesture (e.g., the second user gesture 1230) is held, based on the determination of operation 1420. According to an embodiment of the disclosure, in operation 1440, the electronic device 101 may change the shape of the electronic device 101 by inserting the second housing (e.g., the second housing 1002) into the first housing (e.g., the first housing 1001) or drawing out the second housing (e.g., the second housing 1002) to the outside of the first housing (e.g., the first housing 1001) by the designated length based on a user input to the first icon 1510 or the at least one second icon (e.g., the second icon 1520, the third icon 1530, and/or the fourth icon 1540). According to an embodiment of the disclosure, in operation 1450, the electronic device 101 may display a first screen (e.g., the fifteenth execution screen 1505 of the first application) and the second screen (e.g., the seventeenth execution screen 1535 of the first application) on the shape-changed electronic device 101 according to operation 1440.

According to an embodiment of the disclosure, the electronic device 101 may determine whether the current state of the electronic device 101 is the opened state to display the first icon 1510. According to an embodiment of the disclosure, the electronic device 101 may change the state of the electronic device 101 from the opened state to the closed state according to a selection input to the first icon 1510. According to an embodiment of the disclosure, as shown in FIG. 15B, the electronic device 101 may display the seventeenth execution screen 1535 having attributes different from those of the fifteenth execution screen 1505 in the fully closed state. Alternatively, according to an embodiment of the disclosure, as shown in FIG. 16B, the electronic device 101 may display the eighteenth execution screen 1620 of the second application having at least partially different attributes from those of the sixteenth execution screen 1515 in the fully closed state. According to an embodiment of the disclosure, the first icon 1510 may not be displayed in the fully closed state of the electronic device 101. According to an embodiment of the disclosure, the selection input to the first icon 1510 may include a continuous touch input starting from the held point toward the first icon 1510. According to an embodiment of the disclosure, the selection input to the first icon 1510 may include a discontinuous input for selecting the first icon 1510 after the hold of the user gesture is released. To that end, the electronic device 101 according to an embodiment of the disclosure may maintain the state in which the at least one icon (e.g., the first icon 1510, the second icon 1520, the third icon 1530, and/or the fourth icon 1540) is displayed for a designated time after the user gesture is released. According to an embodiment of the disclosure, the second icon 1520 may include an icon for displaying the application execution screen (e.g., the execution screen of the first application or the execution screen of the second application) in a ratio of 4:3. According to an embodiment of the disclosure, the electronic device 101 may draw out the flexible display (e.g., the display 1003) to the outside of the electronic device 101 by the designated length or insert it into the electronic device 101 to display the application execution screen (e.g., the execution screen of the first application or the execution screen of the second application) in a ratio of 4:3, based on a selection input to the second icon 1520 (e.g., a continuous touch input starting from the held point toward the second icon 1520). According to an embodiment of the disclosure, the third icon 1530 may include an icon for displaying the application execution screen (e.g., the execution screen of the first application or the execution screen of the second application) in a ratio of 16:9. According to an embodiment of the disclosure, the electronic device 101 may draw out the flexible display (e.g., the display 1003) to the outside of the electronic device 101 by the designated length or insert it into the electronic device 101 to display the application execution screen (e.g., the execution screen of the first application or the execution screen of the second application) in a ratio of 16:9, based on a selection input to the third icon 1530 (e.g., a continuous touch input starting from the held point toward the third icon 1530). According to an embodiment of the disclosure, the fourth icon 1540 may include an icon for displaying the application execution screen (e.g., the execution screen of the first application) in the fully opened state of the electronic device 101. According to an embodiment of the disclosure, the electronic device 101 may draw out the flexible display (e.g., the display 1003) to the outside of the electronic device 101 to switch the state of the electronic device 101 from the current state to the fully opened state based on a selection input to the fourth icon 1540 (e.g., a continuous touch input starting from the held point to the fourth icon 1540). According to an embodiment of the disclosure, the electronic device 101 may determine whether the current state of the electronic device 101 is the opened state to display the fourth icon 1540. According to an embodiment of the disclosure, the fourth icon 1540 may not be displayed in the fully opened state of the electronic device 101. Similarly, according to an embodiment of the disclosure, the electronic device 101 may determine whether the current state of the electronic device 101 has been extended to a state in which the screen may be displayed in a designated screen ratio (e.g., a screen ratio of 4:3) to display the second icon 1520 and the third icon 1530. According to an embodiment of the disclosure, the second icon 1520 and/or the third icon 1530 may not be displayed in the state to which the state of the electronic device 101 has been extended to display the screen in the designated screen ratio (e.g., a screen ratio of 4:3). According to an embodiment of the disclosure, as shown in FIGS. 15B and 16B, the electronic device 101 may display the execution screen of a specific application as the full screen, on the electronic device 101 having a shape changed according to a selection input to at least one icon.

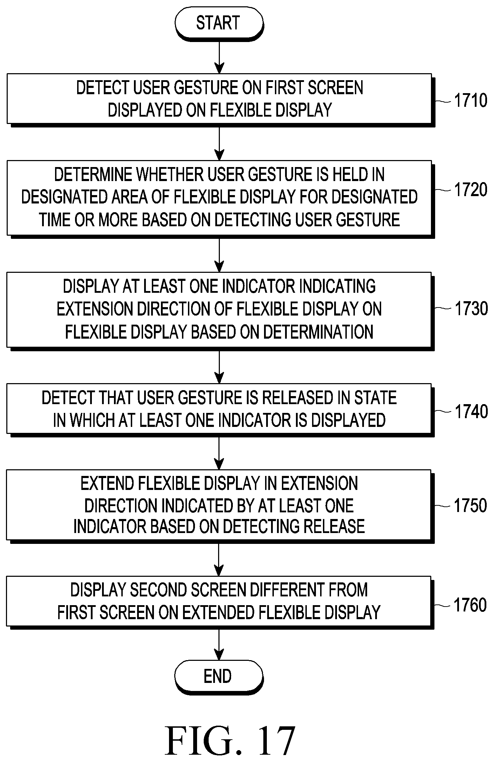

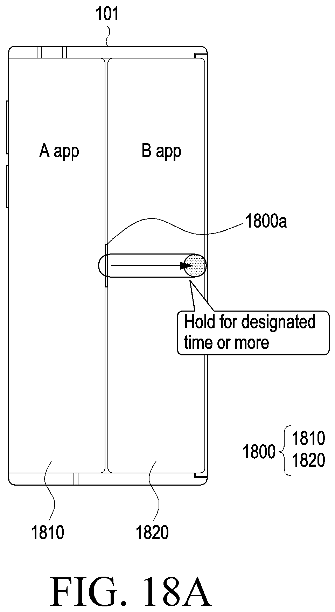

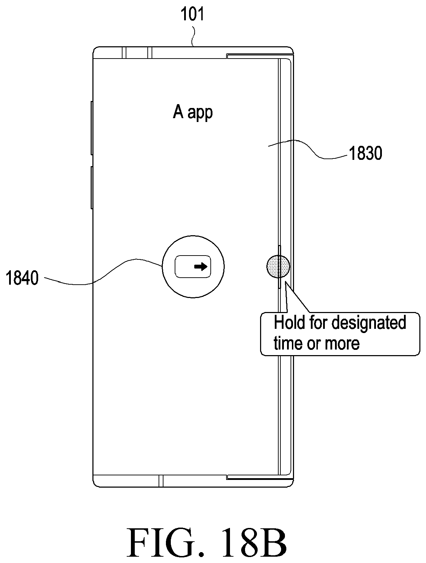

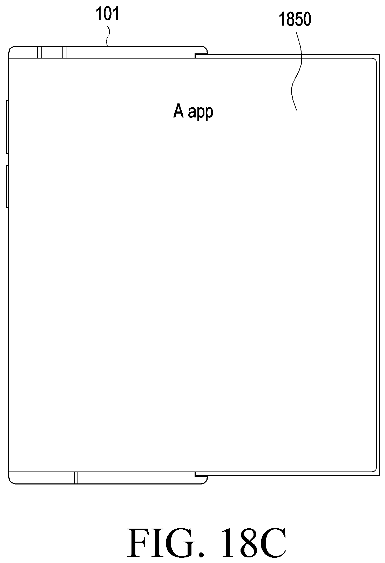

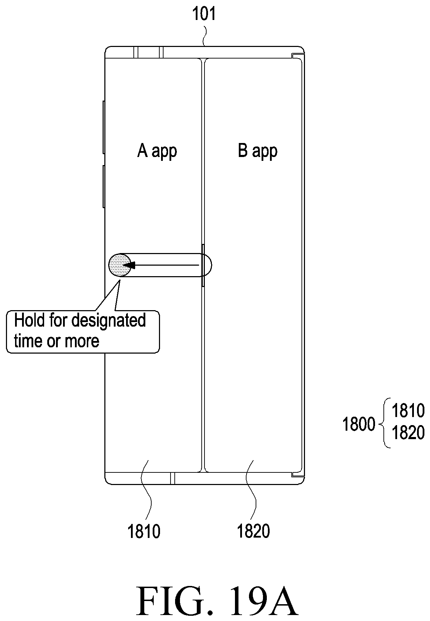

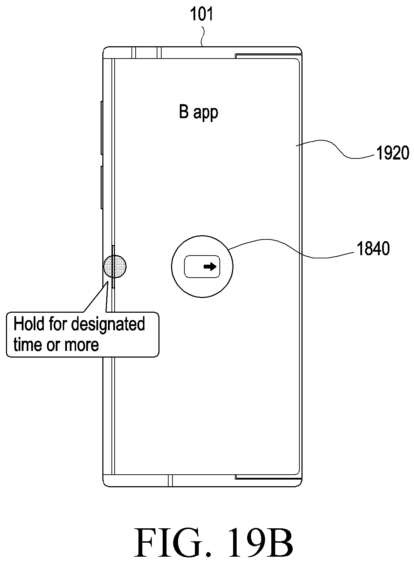

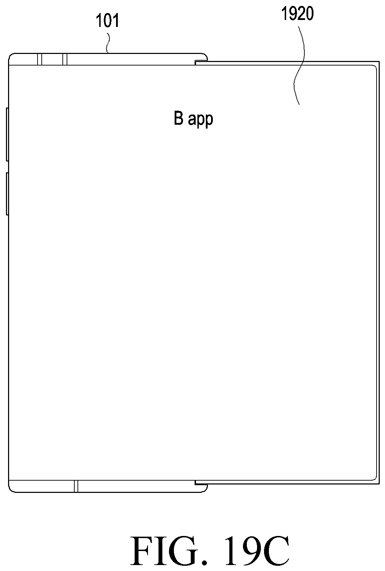

FIG. 17 is an exemplary view illustrating a function or operation of displaying an indicator 1840 indicating an extension direction (e.g., to the right) of a flexible display (e.g., the display 1003) when a hold of a user gesture input to an electronic device 101 is detected by the electronic device according to an embodiment of the disclosure. FIGS. 18A, 18B, and 18C are exemplary views illustrating a function or operation of displaying an indicator 1840 indicating that a flexible display (e.g., the display 1003) is extended in a first direction by an electronic device 101 when a user gesture in the first direction (e.g., to the right) is detected from a user interface perspective, in relation to FIG. 17. FIGS. 19A, 19B, and 19C are exemplary views illustrating a function or operation of displaying an indicator 1840 indicating that a flexible display is extended in a first direction by an electronic device 101 when a user gesture in the second direction (e.g., to the left) is detected from a user interface perspective, in relation to FIG. 17.

Referring to FIG. 17, in operation 1710, the electronic device 101 may detect a user gesture (e.g., the second user gesture 1230) on a first screen (e.g., the tenth screen 1800) displayed on the flexible display (e.g., the display 1003). According to an embodiment of the disclosure, as shown in FIGS. 18A and 19A, the tenth screen 1800 may include a eighteenth execution screen 1810 of a first application (e.g., a calendar application), a nineteenth execution screen 1820 of a second application (e.g., a call application), and/or a fourth visual object 1800a displayed at a boundary between the eighteenth execution screen 1810 and the nineteenth execution screen 1820 to indicate the boundary between the eighteenth execution screen 1810 and the nineteenth execution screen 1820, displayed through a multi-window mode (e.g., a display mode in which the respective execution screens of a plurality of applications are simultaneously displayed). According to an embodiment of the disclosure, as shown in FIG. 15A, the user gesture (e.g., the second user gesture 1230) may include a drag gesture in a designated direction (e.g., the right direction) on the tenth screen 1800 (e.g., a fourth visual object 1800a). According to an embodiment of the disclosure, as shown in FIG. 19A, the user gesture (e.g., the second user gesture 1230) may include a drag gesture in a designated direction (e.g., the left direction) on the tenth screen 1800 (e.g., a fourth visual object 1800a). According to an embodiment of the disclosure, the user gesture (e.g., the second user gesture 1230) may include other various gestures than the drag gesture, such as a swipe gesture, a tap gesture, a touch gesture through an external electronic device (e.g., a stylus pen), and/or a hovering gesture.

According to an embodiment of the disclosure, in operation 1720, based on detecting the user gesture, the electronic device 101 may determine whether the user gesture is held in a designated area 760 of the flexible display (e.g., the display 1003) for a designated time or more and then released. According to an embodiment of the disclosure, as shown in FIGS. 18A and 19A, the user gesture (e.g., the second user gesture 1230) may include a drag gesture to drag the fourth visual object 1800a to the designated area 760 of the flexible display (e.g., the display 1003). According to an embodiment of the disclosure, the designated area 760 may include an area around the edge (e.g., right edge) of the flexible display (e.g., the display 1003) exposed to the outside as shown in FIG. 18A, or an area around the edge (e.g., left edge) of the flexible display (e.g., the display 1003) exposed to the outside as shown in FIG. 19A. According to an embodiment of the disclosure, the designated area 760 may be defined previously (e.g., at the time of manufacturing the electronic device 101) or may be defined by the user. According to an embodiment of the disclosure, the electronic device 101 may determine whether the user gesture is held for a designated time (e.g., 3 seconds) in the designated area 760 (e.g., the right edge or left edge of the flexible display exposed to the outside). According to an embodiment of the disclosure, the electronic device 101 may determine whether the user gesture is held in the designated area 760 (e.g., the right edge or left edge of the flexible display exposed to the outside) for a designated time or more.

According to an embodiment of the disclosure, in operation 1730, the electronic device 101 may display at least one indicator 1840 indicating the extension direction of the flexible display (e.g., the display 1003) on the flexible display (e.g., the display 1003) based on the determination of operation 1720. According to an embodiment of the disclosure, the electronic device 101 may display at least one indicator 1840 while the user gesture is held in the designated area 760 (e.g., the right edge or left edge of the flexible display exposed to the outside) for a designated time or more. According to an embodiment of the disclosure, as shown in FIG. 18B, the at least one indicator 1840 may be displayed overlapping the twentieth execution screen 1830 on the twentieth execution screen 1830 of the first application. According to an embodiment of the disclosure, the at least one indicator 1840 may be displayed overlapping the twenty first execution screen 1920 of the second application as shown in FIG. 19B. According to an embodiment of the disclosure, the at least one indicator 1840 may be continuously displayed while the user gesture is held. According to an embodiment of the disclosure, the at least one indicator 1840 may not be displayed if a designated time elapses from the time when the hold of the user gesture starts. Although not shown in the drawings, when detecting a gesture to move the fourth visual object 1800a to the designated area 760 (e.g., an area around the left edge of the flexible display exposed) while displaying the execution screens of a plurality of applications in the multi-window mode in the opened state (e.g., the fully opened state) of the electronic device 101, the electronic device 101 may display the direction indicated by the at least one indicator 1840 to indicate the direction (e.g., the left direction) in which the electronic device 101 switches to the closed state.

According to an embodiment of the disclosure, in operation 1740, the electronic device 101 may detect that the user gesture is released in a state in which the at least one indicator 1840 is displayed. According to an embodiment of the disclosure, in operation 1750, the electronic device 101 may extend the flexible display (e.g., the display 1003) in the extension direction (e.g., the right direction) indicated by the at least one indicator 1840 based on detecting the release according to operation 1740. According to an embodiment of the disclosure, in operation 1760, the electronic device 101 may display the second screen (e.g., the twenty second execution screen 1850 of the first application or the twenty third execution screen 1930 of the second application) different from the first screen (e.g., the tenth screen 1800) on the extended display. According to an embodiment of the disclosure, based on detecting that the user gesture is released in the designated area 760 (e.g., the right edge of the flexible display exposed to the outside), the electronic device 101 may display (e.g., terminate the multi-window mode), as the full screen, the twenty second execution screen 1850 having an attribute (e.g., size, type and/or resolution of visual object) at least partially different from the eighteenth execution screen 1810 on the extended flexible display (e.g., the display 1003) area. According to an embodiment of the disclosure, based on detecting that the user gesture is released in the designated area 760 (e.g., the left edge of the flexible display exposed to the outside), the electronic device 101 may display (e.g., terminate the multi-window mode), as the full screen, the twenty third execution screen 1930 having an attribute (e.g., size, type and/or resolution of visual object) at least partially different from the nineteenth execution screen 1820 on the extended flexible display (e.g., the display 1003) area. Although not shown, according to an embodiment of the disclosure, when detecting a user gesture in the left direction in the opened state of the electronic device 101, the electronic device 101 may switch the state of the electronic device 101 from the opened state to the fully closed state. In this case, according to an embodiment of the disclosure, the electronic device 101 may terminate the multi-window mode and display the execution screen of a specific application as the full screen in the fully closed state.

According to an embodiment of the disclosure, an electronic device 101 may comprise a first housing, a second housing disposed to be movable with respect to the first housing and overlapping at least a portion of the first housing, at least one processor and a driving module disposed in the second housing, and a flexible display partially mounted on a surface of the second housing and at least partially exposed to an outside of the electronic device. A portion of the flexible display may be inserted into the first housing or drawn out from the first housing according to sliding in or sliding out of the second housing. The at least one processor may be configured to detect a user gesture on a first screen displayed on a flexible display of an electronic device, determine whether the user gesture is held in a designated area 760 of the flexible display for a designated time or more based on detecting the user gesture, based on the determination, display, , around an area where the user gesture is held, a first icon for inserting a second housing of the electronic device into a first housing of the electronic device and at least one second icon for drawing out the second housing to an outside of the first housing by a designated length, based on a user input to the first icon or the at least one second icon, change a shape of the electronic device by inserting the second housing into the first housing or drawing out the second housing to the outside of the first housing by the designated length, and display a second screen different from the first screen on the shape-changed electronic device.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first housing;
a second housing disposed to be movable with respect to the first housing and overlapping at least a portion of the first housing;
a driving device configured to slide in or slide out the second housing; and
a flexible display partially mounted on a surface of the second housing and at least partially exposed to an outside of the electronic device, wherein a portion of the flexible display is configured to be inserted into the first housing or drawn out from the first housing according to sliding in or sliding out of the second housing,
a trigger button configured to slide in or slide out the second housing;
a touchscreen configured to receive a user's touch input;
at least one processor operably connected to the first housing, the second housing, the driving device, the flexible display, the trigger button, and the touchscreen; and
memory configured to store instructions, wherein the instructions, when executed, cause the at least one processor to:
when receiving a first input for sliding out the second housing while operating in slide-in state, extend a display screen while maintaining a window mode in the slide-in state; and
when receiving a second input for sliding out the second housing, terminate a window mode and extend a display screen in a changed window mode while being in the slide-in state.

2. The electronic device of claim 1, wherein the first input includes an input by manipulation of the trigger button, and the second input includes an input through the touchscreen.

3. The electronic device of claim 1 or 2, wherein the changed window mode includes a mode set so that a first execution screen of a first application and a second execution screen of a second application are displayed in a multi-window view mode.

4. The electronic device of any one of claims 1 to 3, wherein the display screen includes a third execution screen of a third application,
wherein the user gesture includes a drag gesture starting at a portion of the third execution screen and held and released in a designated area (760), and
wherein the at least one processor is further configured to scroll the third execution screen based on a drag gesture on the third execution screen.

5. The electronic device of any one of claims 1 to 4, wherein the second input includes a user gesture to move a visual object into a designated area on the touchscreen, and
wherein the designated area includes an area around an upper edge of a portion where the touchscreen is exposed.

6. The electronic device of any one of claims 1 to 5, wherein the instructions further include an instruction to, based on detecting that the user gesture is held and then released in the designated area (760) when the electronic device is in a closed state, draw out the second housing to the outside of the first housing by a designated length while terminating the changed window mode.

7. The electronic device of any one of claims 1 to 6, wherein the instructions further include an instruction to display at least one first icon when the visual object is positioned in the designated area, and
wherein the at least one first icon includes a plurality of icons each representing screen ratios.

8. The electronic device of any one of claims 1 to 7, wherein the instructions further include instructions to:
based on the user gesture being held, determine whether the electronic device is in a closed state; and
when the electronic device is in the closed state, not display the at least one first icon.

9. The electronic device of any one of claims 1 to 8, wherein the instructions further include an instruction to, based on the user gesture being held, display at least one indicator indicating a drawn-out direction of the touchscreen.

10. The electronic device of any one of claims 1 to 9, wherein the at least one indicator is not displayed when the user gesture is released.

11. A method, comprising:
detecting a user gesture on a first screen displayed on a flexible display of an electronic device;
based on detecting the user gesture, determining whether the user gesture is held in a designated area (760) of the flexible display for a designated time or more;
based on the determination, displaying, around an area where the user gesture is held, a first icon for inserting a second housing of the electronic device into a first housing of the electronic device and at least one second icon for drawing out the second housing to an outside of the first housing by a designated length;
based on a user input to the first icon or the at least one second icon, changing a shape of the electronic device by inserting the second housing into the first housing or drawing out the second housing to the outside of the first housing by the designated length; and
displaying a second screen different from the first screen on the shape-changed electronic device.

12. The method of claim 11, wherein the first screen includes a screen where a first execution screen of a first application and a second execution screen of a second application are displayed in a multi-window view mode, and
wherein the user gesture includes a drag gesture for a first visual element representing a boundary between the first execution screen and the second execution screen.

13. The method of claim 11 or 12, wherein the first screen includes a third execution screen of a third application,
wherein the user gesture includes a drag gesture starting at a portion of the third execution screen and held and released in the designated area (760), and
wherein the method further comprises, based on the drag gesture on the third execution screen, scrolling the third execution screen.

14. The method of any one of claims 11 to 13, wherein the designated area (760) includes an area around an upper edge of a portion where the flexible display is exposed.

15. The method of any one of claims 11 to 14, wherein the method for controlling the electronic device further comprises, based on detecting that the user gesture is held and then released in the designated area (760) when the electronic device is in a fully closed state, drawing out the second housing to the outside of the first housing by a designated length while terminating the multi-window mode.
